# EUROPEAN PATENT APPLICATION

(11) **EP 4 679 322 A1**
(43) Date of publication of application: **14.01.2026**
(21) Application number: 24777566.1
(22) Date of filing: 20.02.2024
(51) Int. Cl.: G06N 3/04

(54) **NEURAL NETWORK, SELF-DRIVING METHOD, AND APPARATUS**

(30) Priority: 27.03.2023 CN 202310334909
(71) Applicant: Huawei Technologies Co., Ltd., Shenzhen, Guangdong 518129 (CN)
(72) Inventor: CHEN, Yuying, Shenzhen, Guangdong 518129 (CN); LIU, Xiaoxue, Shenzhen, Guangdong 518129 (CN); WANG, Zhitao, Shenzhen, Guangdong 518129 (CN); WANG, Yongyong, Shenzhen, Guangdong 518129 (CN); LI, Maosen, Shenzhen, Guangdong 518129 (CN); CHE, Yuhan, Shenzhen, Guangdong 518129 (CN); SUN, Kai, Shenzhen, Guangdong 518129 (CN); FAN, Shiwei, Shenzhen, Guangdong 518129 (CN); XU, Yanchuan, Shenzhen, Guangdong 518129 (CN); CHENG, Siyuan, Shenzhen, Guangdong 518129 (CN); ZHANG, Hongbo, Shenzhen, Guangdong 518129 (CN)
(74) Representative: Pfenning, Meinig & Partner mbB
(86) International application number: PCT/CN2024/077817
(87) International publication number: WO 2024/198773

(57) **Abstract**

A neural network, and an autonomous driving method and apparatus are provided. The neural network includes a mixture of experts MOE network and N parallel head networks. The MOE network is used to perform feature extraction and feature fusion on input data to obtain N types of feature data, where the input data includes ego vehicle data, obstacle data, road topology data, and navigation data, the N types of feature data are in a one-to-one correspondence with the N parallel head networks, and each of the N parallel head networks corresponds to one autonomous driving task (S310); and each head network performs one corresponding autonomous driving task based on one type of feature data that is correspondingly input, where the autonomous driving task includes a prediction task, a decision task, and a planning task (S320). Each autonomous driving task can maintain independence to some extent while maintaining certain interaction, which is more in line with an actual driving requirement.

## Description

This application claims priority to Chinese Patent Application No. 202310334909.X, filed with the China National Intellectual Property Administration on March 27, 2023 and entitled "NEURAL NETWORK, AND AUTONOMOUS DRIVING METHOD AND APPARATUS", which is incorporated herein by reference in its entirety.

### TECHNICAL FIELD

This application relates to the field of autonomous driving technologies, and in particular, to a neural network, and an autonomous driving method and apparatus.

### BACKGROUND

As a module most indispensable to an autonomous driving system, a decision and planning module for autonomous driving is responsible for making decisions on and planning next behavior and a next action of an ego vehicle based on a historical status and a current status. For example, if a preceding vehicle illegally parks and occupies a road, the decision and planning module determines whether the ego vehicle is to change a lane, and plans when and how the ego vehicle changes the lane. A prediction module for autonomous driving plays an important role in an interaction scenario. Accurate prediction of next behavior and a next action of another vehicle can help the ego vehicle to make a plan in advance to avoid a collision risk.

Prediction, decision, and planning problems in autonomous driving are always a challenging topic, and their complexity stems from diversity of traffic environments and uncertainty of movements of traffic participants. An existing rule-based decision and planning method relies on features and experience abstracted by algorithm designers, has limited modeling capability for a complex scenario, and is difficult to implement all-scenario generalization. Consequently, a decision and planning result that is not human-like often occurs. With development of deep learning, there has been a major trend to "learn" to drive by learning and imitating performance of human drivers through neural networks. Massive driving data and environment data of human drivers are collected, so that the network can be trained to predict a future movement of an obstacle based on a historical status and a current status of an ego vehicle, an obstacle status, and environment information, make a decision, and plan behavior and a trajectory of the ego vehicle.

However, in an existing neural network-based autonomous driving solution, mutual impact and requirements for prediction, decision, and planning are not considered. Consequently, a result output by the solution cannot meet an actual driving requirement.

### SUMMARY

Embodiments of this application provide a neural network, and an autonomous driving method and apparatus, so that each autonomous driving task can maintain independence to some extent while maintaining certain interaction, which is more in line with an actual driving requirement.

According to a first aspect, this application provides a neural network for autonomous driving. The neural network includes a mixture of experts MOE network and N parallel head networks, where N is a positive integer. The MOE network is used to perform feature extraction and feature fusion on input data to obtain N types of feature data, where the input data includes ego vehicle data, obstacle data, road topology data, and navigation data, the N types of feature data are in a one-to-one correspondence with the N parallel head networks, and each of the N parallel head networks corresponds to one autonomous driving task. Each head network performs one corresponding autonomous driving task based on one type of feature data that is correspondingly input, where the autonomous driving task includes a prediction task, a decision task, and a planning task.

From the perspective of a technical effect, in this application, data required by each autonomous driving task is encoded in a unified manner (that is, feature extraction) by using the MOE network, so that each autonomous driving task maintains certain interaction (that is, there is no specific upstream/downstream relationship between head networks used to perform different autonomous driving tasks. Therefore, in a training process, an output result of each head network is used to update the entire neural network, so that head networks can affect each other). In addition, because the head network corresponding to each autonomous driving task has an independent output, the head network corresponding to each autonomous driving task can be further independently optimized (that is, each network maintains independence to some extent), which is more in line with an actual driving requirement. In addition, the MOE network is used for unified encoding, so that a quantity of model parameters of the neural network can be significantly increased while a computation amount remains unchanged in an inference process, to effectively improve a generalization capability of a model in a plurality of scenarios. In addition, compared with independent single-task encoding, unified multi-task encoding can effectively reduce computing power consumption and shorten latency.

In a feasible implementation, the MOE network includes a plurality of expert networks, and each of the plurality of expert networks includes a self-attention network and a cross-attention network. The self-attention network is used to perform feature extraction on the input data, the cross-attention network is used to perform feature fusion on features extracted by using the self-attention network, and the N types of feature data are generated based on an output result of the cross-attention network.

In a feasible implementation, the plurality of expert networks include a first expert network, the first expert network is an expert network that performs feature extraction and feature fusion on the input data in an inference process, and the first expert network includes a first self-attention network, a first cross-attention network, a second self-attention network, and a second cross-attention network. The first self-attention network is used to perform feature extraction on the ego vehicle data and the obstacle data, to obtain a first query (Query) matrix, a first key (Key) matrix, and a first value (Value) matrix; and the second self-attention network is used to perform feature extraction on the road topology data and the navigation data, to obtain a second query (Query) matrix, a second key (Key) matrix, and a second value (Value) matrix. The first cross-attention network is used to perform feature fusion on the first query matrix, the second key matrix, and the second value matrix; the second cross-attention network is used to perform feature fusion on the second query matrix, the first key matrix, and the first value matrix; and the N types of feature data are generated based on an output result of the first cross-attention network and an output result of the second cross-attention network.

From the perspective of a technical effect, in this application, a self-attention and cross-attention cascading structure is used in each expert network, so that feature data that is output by the MOE network and that is used to perform each autonomous driving task can include more information, to improve accuracy of an output result corresponding to each autonomous driving task.

In a feasible implementation, an output result corresponding to the prediction task includes a predicted trajectory of an obstacle and predicted trajectory distribution of the obstacle; an output result corresponding to the decision task includes an ego vehicle decision, and the ego vehicle decision includes an ego vehicle preemption decision, an ego vehicle avoidance decision, and an obstacle ignoring decision; and an output result corresponding to the planning task includes a planned road of an ego vehicle, a planned trajectory of the ego vehicle, and planned trajectory distribution of the ego vehicle.

According to a second aspect, this application provides a method for training a neural network. The neural network includes a mixture of experts MOE network and N parallel head networks, and the MOE network includes M expert networks, where M and N are positive integers. The method includes: in each training process, performing feature extraction and feature fusion on each piece of training data in one batch of training data by using each of the M expert networks, to obtain N types of feature data; separately weighting a same type of feature data output by the M expert networks, to obtain N types of weighted feature data, where the N types of weighted feature data are in a one-to-one correspondence with the N parallel head networks, each of the N parallel head networks corresponds to one autonomous driving task, and the autonomous driving task includes a prediction task, a decision task, and a planning task; respectively inputting the N types of weighted feature data into the corresponding head networks, to obtain H types of output results corresponding to each piece of training data, where the H types of output results include K types of output results, and K is a positive integer less than or equal to H; accumulating loss values of a part or all of output results in each type of the K types of output results obtained based on the batch of training data, to obtain K accumulated loss values respectively corresponding to the K types of output results; and weighting the K accumulated loss values to obtain one loss value corresponding to each training process, and updating a parameter in the neural network based on the loss value.

The K types of output results correspond to at least one autonomous driving task.

From the perspective of a technical effect, in this application, for a specific application scenario, K types of output results related to the scenario may be selected from H types of output results in a training process, and then a parameter in at least one head network corresponding to the K types of output results is updated, to implement single-task training or multi-task joint training. In addition, a part or all of output results are selected from each type of the K types of output results for training, so that corresponding data is selected for each autonomous driving task for training, to ensure generalization of each task and effectively improve accuracy of an output result of each autonomous driving task.

In a feasible implementation, the K types of output results include a first-type output result, the H types of output results obtained based on the batch of training data include F first-type output results, and the F first-type output results all correspond to a first autonomous driving task in the autonomous driving task. The F first-type output results include E first-type output results, training data used to calculate the E first-type output results carries a label representing the first autonomous driving task, and an accumulated loss value corresponding to the first-type output result is obtained by accumulating E loss values respectively corresponding to the E first-type output results, where E is a positive integer less than or equal to F.

From the perspective of a technical effect, a label representing an autonomous driving task is added to each piece of training data to determine whether the piece of data is used to train a corresponding autonomous driving task. The training data may be selectively used based on a specific application scenario, so that a scenario requirement is met, accuracy of an output result of the neural network is improved, and computing power consumption in a training process is reduced.

In a feasible implementation, the N parallel head networks include a first head network, the first head network outputs D types of output results, and the H types of output results include the D types of output results, where D is a positive integer. After the updating a parameter in the neural network based on the loss value, the method further includes: separately inputting G pieces of training data in a training set into the updated neural network, to obtain the D types of output results output by the first head network, where the training set includes the batch of training data, and G is a positive integer; accumulating loss values of a part or all of output results in each type of the D types of output results, to obtain D accumulated loss values respectively corresponding to the D types of output results; weighting the D accumulated loss values to obtain a first loss value corresponding to the first head network in each training process; and updating a parameter in the first head network based on the first loss value.

The first head network is any one of the N parallel head networks.

From the perspective of a technical effect, in each training process, after parameters in the entire neural network are updated, a loss value corresponding to an output result of each head network is calculated to adjust the head network, to implement independent updating and optimization by using each head network as an object. This implements targeted optimization on each autonomous driving task, and improves accuracy of an output result corresponding to each autonomous driving task.

In a feasible implementation, the N parallel head networks include L head networks, the L head networks correspond to the first autonomous driving task, the L head networks output P types of output results, and the H types of output results include the P types of output results, where L and P are positive integers greater than or equal to 2. After the updating a parameter in the neural network based on the loss value, the method further includes: separately inputting G pieces of training data in a training set into the updated neural network, to obtain the P types of output results output by the L head networks, where the training set includes the batch of training data, and G is a positive integer; accumulating loss values of a part or all of output results in each type of the P types of output results, to obtain P accumulated loss values respectively corresponding to the P types of output results; weighting the P accumulated loss values to obtain a second loss value corresponding to the L head networks in each training process; and updating parameters in the L head networks based on the second loss value.

The L head networks are head networks, corresponding to the first autonomous driving task, in N head networks.

From the perspective of a technical effect, in each training process, after parameters in the entire neural network are updated, an output result of the head network corresponding to each autonomous driving task is calculated, so that one or more head networks corresponding to the autonomous driving task are optimized, to implement independent updating and optimization by using one or more head networks corresponding to each autonomous driving task as an object. This implements targeted optimization on a corresponding autonomous driving task, and improves accuracy of an output result corresponding to each autonomous driving task.

In a feasible implementation, the plurality of types of output results include a predicted trajectory of an obstacle, predicted trajectory distribution of the obstacle, an ego vehicle decision, a planned road of an ego vehicle, a planned trajectory of the ego vehicle, and planned trajectory distribution of the ego vehicle; and the predicted trajectory of the obstacle and the predicted trajectory distribution of the obstacle correspond to the prediction task; the ego vehicle decision corresponds to the decision task; and the planned road of the ego vehicle, the planned trajectory of the ego vehicle, and the planned trajectory distribution of the ego vehicle correspond to the planning task.

According to a third aspect, this application provides an autonomous driving method. The method includes: obtaining input data, where the input data includes ego vehicle data, obstacle data, road topology data, and navigation data; performing feature extraction and feature fusion on the input data by using a mixture of experts MOE network in a neural network, to obtain N types of feature data, where the neural network further includes N parallel head networks, and N is a positive integer; inputting each type of feature data into one corresponding head network in the N parallel head networks, to perform one autonomous driving task corresponding to the head network; and controlling an ego vehicle based on an output result of each autonomous driving task.

In a feasible implementation, each training process of the neural network is as follows: Each expert network in the MOE network is used to perform feature extraction and feature fusion on each piece of training data in one batch of training data, to obtain the N types of feature data; and the neural network is further used to separately weight a same type of feature data output by the MOE network, to obtain N types of weighted feature data; and respectively input the N types of weighted feature data into the corresponding head networks, to obtain H types of output results corresponding to each piece of training data, where the H types of output results include K types of output results, and K is a positive integer less than or equal to H; and a parameter in the neural network is completely updated based on one loss value corresponding to each training process, the loss value is obtained by weighting K accumulated loss values, the K accumulated loss values are in a one-to-one correspondence with the K types of output results, and the K accumulated loss values are obtained by accumulating loss values of a part or all of output results in each type of the K types of output results obtained based on the batch of training data.

In a feasible implementation, the K types of output results include a first-type output result, the H types of output results obtained based on the batch of training data include F first-type output results, and the F first-type output results all correspond to a first autonomous driving task in the autonomous driving task. The F first-type output results include E first-type output results, training data used to calculate the E first-type output results carries a label representing the first autonomous driving task, and an accumulated loss value corresponding to the first-type output result is obtained by accumulating E loss values respectively corresponding to the E first-type output results, where E is a positive integer less than or equal to F.

In a feasible implementation, the N parallel head networks include a first head network, the first head network outputs D types of output results, and the plurality of types of output results include the D types of output results, where D is a positive integer. After the updating a parameter in the neural network based on one loss value, the method further includes: separately inputting G pieces of training data in a training set into the updated neural network, to obtain the D types of output results output by the first head network, where the training set includes the batch of training data, and G is a positive integer; accumulating loss values of a part or all of output results in each type of the D types of output results, to obtain D accumulated loss values respectively corresponding to the D types of output results; weighting the D accumulated loss values to obtain a first loss value corresponding to the first head network in each training process; and updating a parameter in the first head network or adjusting a structure of the first head network based on the first loss value.

In a feasible implementation, the N parallel head networks include L head networks, the L head networks correspond to the first autonomous driving task, the L head networks output P types of output results, and the H types of output results include the P types of output results, where L and P are positive integers greater than or equal to 2. After the updating a parameter in the neural network based on one loss value, the method further includes: separately inputting G pieces of training data in a training set into the updated neural network, to obtain the P types of output results output by the L head networks, where the training set includes the batch of training data, and G is a positive integer; accumulating loss values of a part or all of output results in each type of the P types of output results, to obtain P accumulated loss values respectively corresponding to the P types of output results; weighting the P accumulated loss values to obtain a second loss value corresponding to the L head networks in each training process; and updating parameters in the L head networks based on the second loss value.

In a feasible implementation, the MOE network includes a plurality of expert networks, and each of the plurality of expert networks includes a self-attention network and a cross-attention network. The self-attention network is used to perform feature extraction on the input data, the cross-attention network is used to perform feature fusion on features extracted by using the self-attention network, and the N types of feature data are generated based on an output result of the cross-attention network.

In a feasible implementation, the autonomous driving task includes a prediction task, a decision task, and a planning task. An output result of the prediction task includes a predicted trajectory of an obstacle and predicted trajectory distribution of the obstacle, an output result of the decision task includes an ego vehicle decision, and an output result of the planning task includes a planned road of the ego vehicle, a planned trajectory of the ego vehicle, and planned trajectory distribution of the ego vehicle.

According to a fourth aspect, this application provides an apparatus for training a neural network. The neural network includes a mixture of experts MOE network and N parallel head networks, and the MOE network includes M expert networks, where M and N are positive integers. The apparatus includes: an encoding unit, configured to: in each training process, perform feature extraction and feature fusion on each piece of training data in one batch of training data by using each of the M expert networks, to obtain N types of feature data; and separately weight a same type of feature data output by the M expert networks, to obtain N types of weighted feature data, where the N types of weighted feature data are in a one-to-one correspondence with the N parallel head networks, each of the N parallel head networks corresponds to one autonomous driving task, and the autonomous driving task includes a prediction task, a decision task, and a planning task; a decoding unit, configured to respectively input the N types of weighted feature data into the corresponding head networks, to obtain H types of output results corresponding to each piece of training data, where the H types of output results include K types of output results, and K is a positive integer less than or equal to H; and an updating unit, configured to: accumulate loss values of a part or all of output results in each type of the K types of output results obtained based on the batch of training data, to obtain K accumulated loss values respectively corresponding to the K types of output results; weight the K accumulated loss values to obtain one loss value corresponding to each training process; and update a parameter in the neural network based on the loss value.

In a feasible implementation, the K types of output results include a first-type output result, the H types of output results obtained based on the batch of training data include F first-type output results, and the F first-type output results all correspond to a first autonomous driving task in the autonomous driving task. The F first-type output results include E first-type output results, training data used to calculate the E first-type output results carries a label representing the first autonomous driving task, and an accumulated loss value corresponding to the first-type output result is obtained by accumulating E loss values respectively corresponding to the E first-type output results, where E is a positive integer less than or equal to F.

In a feasible implementation, the N parallel head networks include a first head network, the first head network outputs D types of output results, and the H types of output results include the D types of output results, where D is a positive integer. After the parameter in the neural network is updated based on the loss value, the encoding unit and the decoding unit are further configured to: process G pieces of training data in a training set by using the updated neural network, to obtain the D types output results output by the first head network, where the training set includes the batch of training data, and G is a positive integer; and the updating unit is further configured to: accumulate loss values of a part of or all output results in each type of the D types of output results, to obtain D accumulated loss values respectively corresponding to the D types of output results; weight the D accumulated loss values to obtain a first loss value corresponding to the first head network in each training process; and update a parameter in the first head network based on the first loss value.

In a feasible implementation, the N parallel head networks include L head networks, the L head networks correspond to the first autonomous driving task, the L head networks output P types of output results, and the H types of output results include the P types of output results, where L and P are positive integers greater than or equal to 2. After the parameter in the neural network is updated based on the loss value, the encoding unit and the decoding unit are further configured to: process G pieces of training data in a training set by using the updated neural network, to obtain the P types output results output by the L head network, where the training set includes the batch of training data, and G is a positive integer; and the updating unit is further configured to: accumulate loss values of a part of or all output results in each type of the P types of output results, to obtain P accumulated loss values respectively corresponding to the P types of output results; weight the P accumulated loss values to obtain a second loss value corresponding to the L head network in each training process; and update a parameter in the L head network based on the second loss value.

In a feasible implementation, the H types of output results include a predicted trajectory of an obstacle, predicted trajectory distribution of the obstacle, an ego vehicle decision, a planned road of an ego vehicle, a planned trajectory of the ego vehicle, and planned trajectory distribution of the ego vehicle. The predicted trajectory of the obstacle and the predicted trajectory distribution of the obstacle correspond to the prediction task; the ego vehicle decision corresponds to the decision task; and the planned road of the ego vehicle, the planned trajectory of the ego vehicle, and the planned trajectory distribution of the ego vehicle correspond to the planning task.

According to a fifth aspect, this application provides an autonomous driving apparatus. The apparatus includes: an obtaining unit, configured to obtain input data, where the input data includes ego vehicle data, obstacle data, road topology data, and navigation data; a processing unit, configured to: perform feature extraction and feature fusion on the input data by using a mixture of experts MOE network in a neural network, to obtain N types of feature data, where the neural network further includes N parallel head networks, and N is a positive integer; and input each type of feature data into one corresponding head network in the N parallel head networks, to perform one autonomous driving task corresponding to the head network; and a control unit, configured to control an ego vehicle based on an output result of each autonomous driving task.

In a feasible implementation, in each training process of the neural network, the processing unit is specifically configured to: perform feature extraction and feature fusion on each piece of training data in one batch of training data by using each expert network in the MOE network, to obtain the N types of feature data; separately weight, by using the neural network, a same type of feature data output by the MOE network, to obtain N types of weighted feature data; and respectively input the N types of weighted feature data into the corresponding head networks, to obtain H types of output results corresponding to each piece of training data, where the H types of output results include K types of output results, and K is a positive integer less than or equal to H; and a parameter in the neural network is completely updated based on one loss value corresponding to each training process, the loss value is obtained by weighting K accumulated loss values, the K accumulated loss values are in a one-to-one correspondence with the K types of output results, and the K accumulated loss values are obtained by accumulating loss values of a part or all of output results in each type of the K types of output results obtained based on the batch of training data.

In a feasible implementation, the K types of output results include a first-type output result, the H types of output results obtained based on the batch of training data include F first-type output results, and the F first-type output results all correspond to a first autonomous driving task in the autonomous driving task. The F first-type output results include E first-type output results, training data used to calculate the E first-type output results carries a label representing the first autonomous driving task, and an accumulated loss value corresponding to the first-type output result is obtained by accumulating E loss values respectively corresponding to the E first-type output results, where E is a positive integer less than or equal to F.

In a feasible implementation, the N parallel head networks include a first head network, the first head network outputs D types of output results, and the plurality of types of output results include the D types of output results, where D is a positive integer. After the parameter in the neural network is updated based on the loss value, the processing unit is further configured to: process G pieces of training data in a training set by using the updated neural network, to obtain the D types output results output by the first head network, where the training set includes the batch of training data, and G is a positive integer; and accumulate loss values of a part or all of output results in each type of the D types of output results, to obtain D accumulated loss values respectively corresponding to the D types of output results; weight the D accumulated loss values to obtain a first loss value corresponding to the first head network in each training process; and update a parameter in the first head network based on the first loss value.

In a feasible implementation, the N parallel head networks include L head networks, the L head networks correspond to the first autonomous driving task, the L head networks output P types of output results, and the H types of output results include the P types of output results, where L and P are positive integers greater than or equal to 2. After the parameter in the neural network is updated based on the loss value, the processing unit is further configured to: process G pieces of training data in a training set by using the updated neural network, to obtain the P types output results output by the L head network, where the training set includes the batch of training data, and G is a positive integer; accumulate loss values of a part or all of output results in each type of the P types of output results, to obtain P accumulated loss values respectively corresponding to the P types of output results; weight the P accumulated loss values to obtain a second loss value corresponding to the L head networks in each training process; and update parameters in the L head networks based on the second loss value.

In a feasible implementation, the MOE network includes a plurality of expert networks, and each of the plurality of expert networks includes a self-attention network and a cross-attention network. The self-attention network is used to perform feature extraction on the input data, the cross-attention network is used to perform feature fusion on features extracted by using the self-attention network, and the N types of feature data are generated based on an output result of the cross-attention network.

In a feasible implementation, the autonomous driving task includes a prediction task, a decision task, and a planning task. An output result of the prediction task includes a predicted trajectory of an obstacle and predicted trajectory distribution of the obstacle, an output result of the decision task includes an ego vehicle decision, and an output result of the planning task includes a planned road of the ego vehicle, a planned trajectory of the ego vehicle, and planned trajectory distribution of the ego vehicle.

According to a sixth aspect, an embodiment of this application provides a chip system. The chip system includes at least one processor, a memory, and an interface circuit. The memory, the interface circuit, and the at least one processor are interconnected through a line, and the at least one memory stores instructions. When the instructions are executed by the processor, the method according to any implementation of the second aspect is implemented.

According to a seventh aspect, an embodiment of this application provides a chip system. The chip system includes at least one processor, a memory, and an interface circuit. The memory, the interface circuit, and the at least one processor are interconnected through a line, and the at least one memory stores instructions. When the instructions are executed by the processor, the method according to any implementation of the third aspect is implemented.

According to an eighth aspect, an embodiment of this application provides a server. The server includes the chip system according to the sixth aspect or the seventh aspect.

According to a ninth aspect, an embodiment of this application provides a vehicle. The vehicle includes the chip system according to the seventh aspect.

According to a tenth aspect, an embodiment of this application provides a computer-readable storage medium. The computer-readable storage medium stores a computer program. When the computer program is executed, the method according to any one of the second aspect and/or the third aspect is implemented.

According to an eleventh aspect, an embodiment of this application provides a computer program product. The computer program product includes instructions. When the instructions are executed, the method according to any one of the second aspect and/or the third aspect is implemented.

### BRIEF DESCRIPTION OF DRAWINGS

The following describes accompanying drawings used in embodiments of this application.
FIG. 1 is a diagram of an application scenario according to an embodiment of this application;
FIG. 2 is a diagram of a process in which a neural network is used to perform an autonomous driving task according to an embodiment of this application;
FIG. 3 is a schematic flowchart of an autonomous driving method performed by using a neural network according to an embodiment of this application;
FIG. 4 is a diagram of a structure of a neural network for autonomous driving according to this application;
FIG. 5 is a schematic flowchart of a method for training a neural network according to an embodiment of this application;
FIG. 6a and FIG. 6b are diagrams of a training process of a neural network according to an embodiment of this application;
FIG. 7 is a schematic flowchart of an autonomous driving method according to an embodiment of this application;
FIG. 8 is a diagram of a hardware structure of a chip according to an embodiment of this application;
FIG. 9 shows an apparatus for training a neural network according to an embodiment of this application;
FIG. 10 shows an autonomous driving apparatus according to an embodiment of this application; and
FIG. 11 is a diagram of a structure of a chip system according to an embodiment of this application.

### DESCRIPTION OF EMBODIMENTS

The following describes embodiments of this application with reference to the accompanying drawings in embodiments of this application. In descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in descriptions of embodiments of this application, "a plurality of" means two or more than two.

The terms "first", "second", "third", "fourth", and the like in the specification, claims, and accompanying drawings of this application are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the enumerated steps or units, but optionally further includes an unenumerated step or unit, or optionally further includes another inherent step or unit of the process, the method, the product, or the device. "Embodiment" mentioned in the specification indicates that a particular feature, structure, or characteristic described with reference to this embodiment may be included in at least one embodiment of this application. The phrase shown in various locations in the specification may not necessarily be a same embodiment, and is not an independent or optional embodiment exclusive from another embodiment. It is explicitly and implicitly understood by a person skilled in the art that embodiments described in the specification may be combined with another embodiment.

The following describes professional terms in this application.
(1) Prediction task: During autonomous driving, the prediction task is used to predict a movement process of an obstacle in a future time period. In this application, an output result corresponding to the prediction task includes a predicted trajectory of the obstacle and predicted trajectory distribution of the obstacle.
(2) Decision task: During autonomous driving, the decision task is used to output an ego vehicle decision. In this application, the ego vehicle decision includes an ego vehicle avoidance decision, an ego vehicle preemption decision, and an obstacle ignoring decision present when an obstacle near the ego vehicle is detected.
(3) Planning task: During autonomous driving, the planning task is used to output a traveling route of an ego vehicle in a future time period. In this application, an output result corresponding to the planning task includes a planned road of the ego vehicle, a planned trajectory of the ego vehicle, and planned trajectory distribution of the ego vehicle.
(4) Mixture of experts (Mixture of Experts, MOE) network: The mixture of experts network includes a plurality of expert networks and a gate network. Internal structures of the expert networks may be the same or different. In a training process, each expert network has a different focus during feature extraction, and the gate network is used to perform weighting on features extracted by using each expert network. In an inference process, the gate network is usually used to determine a specific expert network to be activated, and only the activated expert network is used for feature extraction.
(5) Self-attention (Self-Attention) network and cross-attention (Cross-Attention) network: Inputs of the self-attention network come from a same sequence, and inputs of the cross-attention network come from different sequences (such as a text, a voice, and an image), but these different sequences are the same in dimension.
(6) Ego vehicle data: The ego vehicle data includes positioning of an ego vehicle, and the positioning is represented by a location and orientation of the ego vehicle.
(7) Obstacle data: The obstacle data includes a location, orientation, a speed, a length, and a width of each obstacle. The obstacles include another vehicle, a pedestrian, and other moving or static objects or animals and plants within a specific range away from an ego vehicle, which are not enumerated one by one in this application.
(8) Road topology data: The road topology data includes a road center line, a road side line, a traffic light, a speed limit plate, and their corresponding attribute data. The attribute data of the center line and the road side line includes a dashed line, a solid line, a length of the center line, and a length of the road side line. The attribute of the speed limit plate includes a speed limit value and the like. The attribute of the traffic light includes a color of a current traffic light, waiting duration, and the like.
(9) Navigation data: Before control data of an ego vehicle is output, current navigation data of the ego vehicle includes a road section, a lane selection, a trajectory, and the like that are planned for the ego vehicle in a future time period.

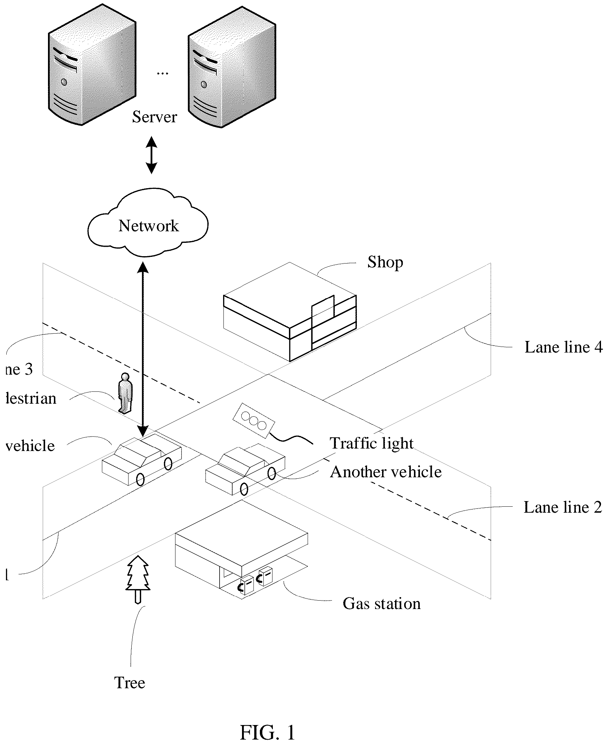

FIG. 1 is a diagram of an application scenario according to an embodiment of this application. The application scenario is used to describe a scenario related to an autonomous driving method in this application.

In FIG. 1, an ego vehicle is a vehicle that performs the autonomous driving method in this application, and the ego vehicle communicates with a server through a network.

A neural network for autonomous driving in this application is deployed in the server. The server collects data transmitted by a vehicle on a road, and then generates training data for training the neural network. Each piece of training data includes ego vehicle data, navigation data, road topology data, obstacle data, and the like. The server periodically trains, based on training data in a training set, the neural network for autonomous driving deployed in the server, to update a model parameter and/or adjust a model structure.

During traveling, the ego vehicle collects, by using a device such as a sensor and a camera installed in the ego vehicle, data in an environment within a specific range from the ego vehicle, including data such as another vehicle, a lane line, a pedestrian, and a traffic light shown in FIG. 1, to generate corresponding ego vehicle data, obstacle data, road topology data, and the like. The neural network for autonomous driving may be deployed or not deployed in the ego vehicle that performs autonomous driving.

When the neural network is deployed in the ego vehicle, the server periodically sends an updated parameter of the neural network to the ego vehicle. During autonomous driving, the ego vehicle may input the generated ego vehicle data, obstacle data, road topology data, and navigation data into the neural network deployed in the vehicle, perform a corresponding autonomous driving task by using the neural network, and generate ego vehicle control data based on an output result of the autonomous driving task, to complete control on the ego vehicle.

When the neural network is not deployed in the ego vehicle, during autonomous driving, the ego vehicle sends the collected data, navigation data of the ego vehicle, and the like to the server through a network. The server generates input data (namely, the ego vehicle data, the obstacle data, the road topology data, and the navigation data) required when the neural network performs an autonomous driving task, and inputs the input data into the neural network. The neural network outputs ego vehicle control data, and sends the control data to the ego vehicle through the network. The ego vehicle performs vehicle control based on the received control data.

Optionally, the input data of the neural network is vectorized data. Specifically, a vectorized form of the ego vehicle data and the obstacle data is represented by locations, orientation, sizes, and the like of objects such as the ego vehicle and an obstacle at different moments in a past time period (for example, elapsed 2s counted from a collection moment). A vectorized form of the road topology data is represented by attributes such as a center line, a road side line, a traffic light, and a speed limit plate of a road section (for example, 10 m to 20 m near the ego vehicle) at different moments in a past time period. A vectorized form of the navigation data is represented by a driving road, a driving lane, a driving trajectory, and the like of the ego vehicle in a past time period.

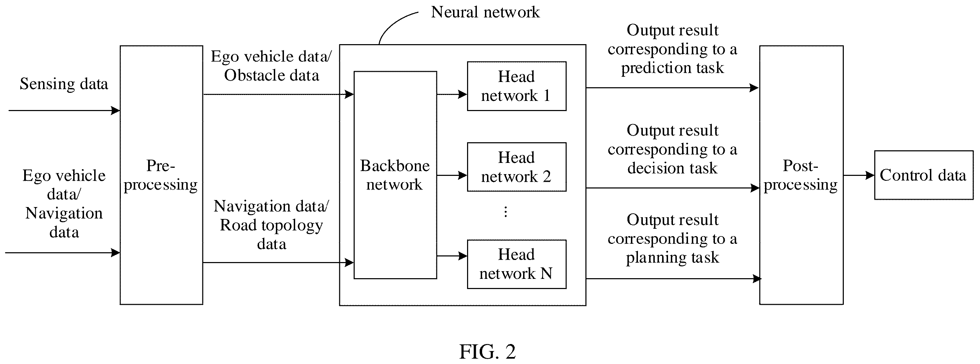

FIG. 2 is a diagram of a process in which a neural network is used to perform an autonomous driving task according to an embodiment of this application. The process is used to describe an implementation process of an autonomous driving method in this application. The neural network in FIG. 2 is a neural network for autonomous driving, and the neural network includes a backbone network and N parallel head networks.

As shown in FIG. 2, an ego vehicle collects data by using a device such as a sensor and a camera (not shown in FIG. 2) that are mounted on the ego vehicle, to obtain corresponding sensing data, and then performs preprocessing (namely, vectorization processing) on the sensing data, ego vehicle data, navigation data, and the like, to obtain input data of the neural network (namely, vectored ego vehicle data, vectored obstacle data, vectored road topology data, and vectored navigation data).

The backbone network is used to perform feature extraction and feature fusion on the vectored input data, and then input obtained feature data into a corresponding head network. Each head network is used to perform a corresponding autonomous driving task, and each head network outputs at least one type of output result.

The autonomous driving task in this application includes a prediction task, a decision task, and a planning task. Each head network corresponds to one autonomous driving task, and autonomous driving tasks corresponding to different head networks are the same or different, that is, each autonomous driving task corresponds to at least one head network.

Post-processing is performed on an output result corresponding to each autonomous driving task. The post-processing converts a predicted trajectory of an obstacle, an ego vehicle decision, a planned trajectory of an ego vehicle, and the like that are output by the head network into final control data of the ego vehicle. Specifically, the post-processing includes validity check, trajectory smoothing and stabilization, and the like that are for the predicted trajectory of the obstacle and the planned trajectory of the ego vehicle.

The ego vehicle controls traveling of the ego vehicle based on the control data.

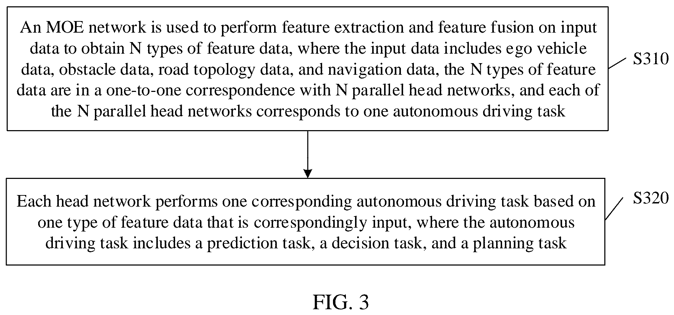

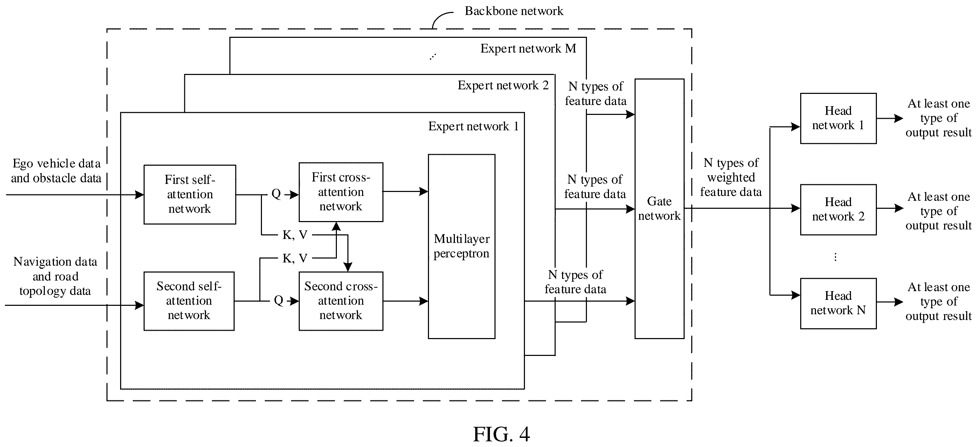

The following describes, by using FIG. 3 and FIG. 4, a structure of a neural network for autonomous driving in this application and a process in which the neural network performs the autonomous driving method in this application. FIG. 3 is a schematic flowchart of an autonomous driving method performed by using a neural network according to an embodiment of this application. FIG. 4 is a diagram of a structure of a neural network for autonomous driving according to this application.

As shown in FIG. 4, the neural network includes a backbone network and N parallel head networks. The backbone network includes a mixture of experts MOE network. N is a positive integer.

An execution process corresponding to the neural network in the autonomous driving method includes step S310 and step S320.

Step S310: The MOE network is used to perform feature extraction and feature fusion on input data to obtain N types of feature data, where the input data includes ego vehicle data, obstacle data, road topology data, and navigation data, the N types of feature data are in a one-to-one correspondence with the N parallel head networks, and each of the N parallel head networks corresponds to one autonomous driving task.

The input data is vectorized data.

The MOE network includes a plurality of expert networks (M in FIG. 4) and a gate network. Each expert network includes a self-attention network, a cross-attention network, a multilayer perceptron (Multilayer Perceptron, MLP), and the like.

The self-attention network is used to perform feature extraction on the input data, the cross-attention network is used to perform feature fusion on features extracted by using the self-attention network, and then a fusion result is input into a multilayer perception network and the like for processing, to obtain the N types of feature data output by each expert network based on the input data (or one piece of training data).

The plurality of expert networks include a first expert network, and the first expert network is any expert network in the plurality of expert networks. The following specifically describes, with reference to an example of an internal structure of an expert network (namely, an expert network 1 in FIG. 4) provided in FIG. 4, a process in which the first expert network is used to perform the autonomous driving method in this application.

Optionally, the first expert network includes a first self-attention network, a first cross-attention network, a second self-attention network, and a second cross-attention network.

As shown in FIG. 4, the first self-attention network is used to perform feature extraction on ego vehicle data and obstacle data in one piece of input data, to obtain a first query (Query) matrix, a first key (Key) matrix, and a first value (Value) matrix (that is, Q, K, and V that are output by the first self-attention network in FIG. 4). The second self-attention network is used to perform feature extraction on road topology data and navigation data in one piece of input data, to obtain a second query (Query) matrix, a second key (Key) matrix, and a second value (Value) matrix (that is, Q, K, and V that are output by the second self-attention network in FIG. 4).

As shown in FIG. 4, the first cross-attention network is used to perform feature fusion on the first query matrix, the second key matrix, and the second value matrix, and the second cross-attention network is used to perform feature fusion on the second query matrix, the first key matrix, and the first value matrix. The N types of feature data are generated based on an output result of the first cross-attention network and an output result of the second cross-attention network.

Optionally, the N types of feature data output by the first expert network are generated by inputting the output result of the first cross-attention network and the output result of the second cross-attention network into a structure such as the multilayer perceptron.

Optionally, the N types of feature data include a prediction feature, a decision feature, a road feature, and an ego vehicle feature. Each type of feature data is subsequently input into a corresponding head network, to perform a corresponding autonomous driving task.

It should be understood that the internal structure of the expert network is merely a feasible example provided in this application, and does not constitute a limitation. Internal structures of the expert networks may be the same or different. Different expert networks have different focuses when performing feature extraction on the input data.

The following describes functions of the gate network in the MOE network.

In a training process, each piece of training data is separately input into M expert networks in FIG. 4, to obtain N types of feature data output by each expert network. In this case, the gate network separately weights a same type of feature data in the N types of feature data output by the M expert networks, to obtain N types of weighted feature data.

For a plurality of pieces of feature data of a same type, when the plurality of pieces of feature data is weighted, a weight corresponding to each piece of feature data is related to an expert network that outputs the feature data.

In an inference process, the gate network activates one of the M expert networks based on a weight of each expert network to perform the inference process, and then inputs N types of feature data output by the expert network into a corresponding head network to perform a corresponding autonomous driving task. For example, the gate network may activate an expert network with a largest weight in the M expert networks to perform the inference process.

Step S320: Each head network performs one corresponding autonomous driving task based on one type of feature data that is correspondingly input, where the autonomous driving task includes a prediction task, a decision task, and a planning task.

In the N types of feature data, the prediction feature is used to perform the prediction task, the decision feature is used to perform the decision task, and the road feature and the ego vehicle feature are used to perform the planning task.

Each head network corresponds to one autonomous driving task, and each autonomous driving task corresponds to at least one head network, that is, each autonomous driving task is performed and completed by at least one head network.

Each of the N head networks outputs at least one type of output result.

In a feasible implementation, the prediction task is performed by one head network, the decision task is performed by one head network, and the planning task is performed by two head networks. An output feature of the head network that performs the prediction task is the prediction feature, an input feature of the head network that performs the decision task is the decision feature, and input features of the two head networks that perform the planning task are the ego vehicle feature and the road feature.

Optionally, an output result corresponding to the prediction task includes a predicted trajectory of an obstacle and predicted trajectory distribution of the obstacle.

Optionally, an output result corresponding to the decision task includes an ego vehicle decision, and the ego vehicle decision includes an ego vehicle preemption decision, an ego vehicle avoidance decision, and an obstacle ignoring decision.

Optionally, an output result corresponding to the planning task includes a planned road of an ego vehicle, a planned trajectory of the ego vehicle, and planned trajectory distribution of the ego vehicle.

The predicted trajectory of the obstacle is a movement trajectory of the obstacle in a future time period. The predicted trajectory distribution of the obstacle represents probability values of trajectory points, in a future time period, falling at or around different location points along a movement trajectory of the obstacle.

The ego vehicle decision is used to provide corresponding decision behavior for the ego vehicle when it is predicted that an obstacle will be encountered in a future time period, where the decision behavior includes a preemption decision, an avoidance decision, and an obstacle ignoring decision.

The planned road is a planning result output at a road scale, and the planned trajectory is a planning result output at a trajectory scale. The planned trajectory distribution represents probability values of trajectory points, in a future time period, falling at or around different location points along a planned trajectory of the ego vehicle.

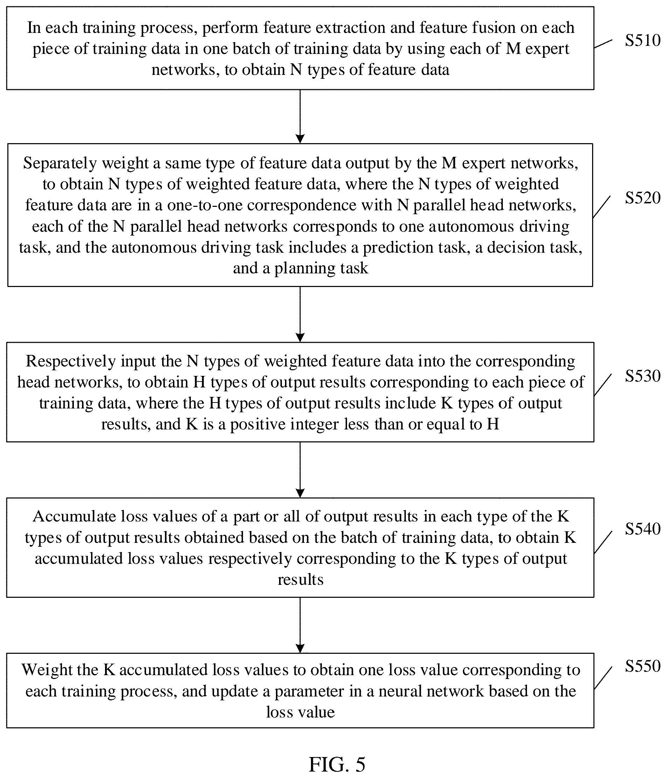

FIG. 5 is a schematic flowchart of a method for training a neural network according to an embodiment of this application, and is used to describe a method for training a neural network (namely, the neural network in FIG. 4) for autonomous driving in this application.

As shown in FIG. 5, the training method includes step S510, step S520, step S530, step S540, and step S550. The training method shown in FIG. 5 is described by using one training process as an example. Each training process includes two parts: single-task training/multi-task joint training and single-task optimization.

Step S510: In each training process, perform feature extraction and feature fusion on each piece of training data in one batch of training data by using each of the M expert networks, to obtain N types of feature data.

One batch of training data used for each training is included in a training set, and the batch of training data includes a plurality of pieces of training data. Each piece of training data in the training set is data in the foregoing vectorized form.

Specifically, each piece of training data in the batch of training data is input into the M expert networks, and each of the M expert networks outputs N types of feature data obtained based on each piece of training data. For each piece of training data, the N types of feature data output by each expert network are output to a gate network, and the gate network performs weighted processing in step S520.

Step S520: Separately weight a same type of feature data output by the M expert networks, to obtain N types of weighted feature data, where the N types of weighted feature data are in a one-to-one correspondence with the N parallel head networks, each of the N parallel head networks corresponds to one autonomous driving task, and the autonomous driving task includes a prediction task, a decision task, and a planning task.

Specifically, for each piece of training data in one batch of training data, each expert network outputs N types of feature data, and a quantity of pieces of feature data is N. For each piece of training data, the M expert networks also output N types of feature data, and a quantity of each type of feature data in the N types of feature data is M. Then, M pieces of feature data in each type of feature data are weighted, to obtain N types of weighted feature data.

For the M pieces of feature data in each type of feature data, a weight corresponding to each piece of feature data when weighting is performed is related to an expert network that outputs the piece of feature data.

Each type of weighted feature data corresponds to one head network, each head network corresponds to one autonomous driving task, and each autonomous driving task corresponds to at least one head network, that is, there is at least one head network used to perform each autonomous driving task.

After the N types of weighted feature data are obtained, each type of weighted feature data is input into the head network corresponding to the type of weighted feature data, to perform the autonomous driving task corresponding to the head network.

Step S530: Respectively input the N types of weighted feature data into the corresponding head networks, to obtain H types of output results corresponding to each piece of training data, where the H types of output results include K types of output results, and K is a positive integer less than or equal to H.

For each piece of training data, the N head networks output the H types of output results in total, and each head network outputs at least one type of output results.

Optionally, the K types of output results in the H types of output results correspond to at least one autonomous driving task (or referred to as at least one head network corresponding to the K types of output results). A head network used to output the K types of output results performs parameter update in a subsequent single-task training/multi-task joint training process (namely, a single-task training/multi-task joint training process described later), and another head network does not perform parameter update in this process.

Step S540: Accumulate loss values of a part or all of output results in each type of the K types of output results obtained based on the batch of training data, to obtain K accumulated loss values respectively corresponding to the K types of output results.

Specifically, for each piece of training data, the N head networks output the H types of output results (a quantity of output results is also H, that is, a quantity of each type of output results is 1). It is assumed that the batch of training data includes F pieces of training data. In this case, the H types of output results are also obtained based on the batch of training data. A quantity of H types of output results is H*F, and a quantity of each type of output results is F.

The K types of output results are selected from the H types of output results obtained based on the batch of training data, where a quantity of the K types of output results is K*F. Loss values of a part or all of F output results in each type of the K types of output results are accumulated, to obtain an accumulated loss value corresponding to each type of output results. Then, K accumulated loss values are obtained in total.

The H types of output results include a predicted trajectory of an obstacle, predicted trajectory distribution of the obstacle, an ego vehicle decision, a planned road of an ego vehicle, a planned trajectory of the ego vehicle, and planned trajectory distribution of the ego vehicle.

The predicted trajectory of the obstacle and the predicted trajectory distribution of the obstacle correspond to the prediction task. The ego vehicle decision corresponds to the decision task. The planned road of the ego vehicle, the planned trajectory of the ego vehicle, and the planned trajectory distribution of the ego vehicle correspond to the planning task.

The following describes a feasible manner of selecting a part or all of output results from each type of output results and then accumulating loss values of the output results.

A first-type output result in the K types of output results is used as an object for description, and the first-type output result is any type of output result in the K types of output results.

In this selection manner, selection is performed by using a task label of training data. Therefore, a meaning of a task label carried in training data is first described. For details, refer to Table 1. Each piece of training data in a training set may carry or not carry a task label. Further, each piece of training data that carries a task label may carry one or more task labels.

As shown in Table 1, if the training data carries a label of a planning task, a loss value of an output result that corresponds to the planning task and that is in H types of output results obtained based on the training data is used to perform the foregoing accumulation calculation. Optionally, the label of the planning task may be marked on ego vehicle data in the training data.

Similarly, if the training data carries a label of a decision task or a label of a prediction task, a loss value of an output result that corresponds to the decision task or the prediction task and that is in H types of output results obtained based on the training data is used to perform the foregoing accumulation calculation. Optionally, the label of the decision task and the label of the prediction task may be marked on obstacle data in the training data.

Similarly, if the training data does not carry a task label (that is, none), a loss value of H types of output results obtained based on the training data is not used to perform the foregoing accumulation calculation.

**Table 1 Examples of task labels of training data**

| One piece of training data | Task label | Meaning |
|---|---|---|
| Ego vehicle data | Planning | The data is used to calculate a loss value of the planning task. |
| Obstacle data | Decision/Prediction | The data is used to calculate a loss value of the decision task or the prediction task. |
| | None | The data is not used to calculate a loss value of the planning task/the decision task and a loss value of the prediction task. |

An example in which the batch of training data includes the F pieces of training data is used. In this case, K types of output results obtained based on the batch of training data include F first-type output results. If the F first-type output results are all corresponding to the first autonomous driving task in the autonomous driving task, the F first-type output results are all obtained through output of the head network corresponding to the first autonomous driving task. If the F first-type output results include E first-type output results and training data used to calculate the E first-type output results carries a label representing the first autonomous driving task, an accumulated loss value corresponding to the first-type output result is obtained by accumulating E loss values respectively corresponding to the E first-type output results, where E is a positive integer less than or equal to F.

After the K accumulated loss values respectively corresponding to the K types of output results are obtained through calculation, the following step S550 starts to be performed.

Step S550: Weight the K accumulated loss values to obtain one loss value corresponding to each training process, and update a parameter in the neural network based on the loss value.

A weight corresponding to each type of output result in the K types of output results is related to an autonomous driving task corresponding to the type of output result.

After one loss value corresponding to each training process is obtained, a parameter in the neural network (a backbone network + a head network used to output the K types of output results) is updated based on the loss value.

From the perspective of a technical effect, in this application, in a specific application scenario, K types of output results (the K types of output results correspond to at least one autonomous driving task, that is, correspond to a specific application scenario) may be selected from H types of output results in a training process, and then a parameter in at least one head network corresponding to the K types of output results is updated, to implement single-task training or multi-task joint training (for example, in a weak interaction scenario in which a co-directional vulnerable road user (Vulnerable Road User, VRU) occupies a lane ahead and the ego vehicle performs obstacle avoidance and overtaking, joint training of a planning task and a prediction task is performed; or in a strong interaction scenario in which the ego vehicle changes a lane and there is a vehicle behind the target lane, joint training of a planning task, a decision task, and a prediction task is performed).

In addition, a part or all of output results are selected from each type of the K types of output results for training, so that corresponding data is selected for each autonomous driving task for training, to ensure generalization of each task (for example, data from traveling on an open road is of no value for a decision task and prediction task, but is of value for a training planning task).

After the parameter in the neural network is updated, single-task optimization may be further performed on a head network or a head network corresponding to a single autonomous driving task, to implement independent adjustment of each autonomous driving task. The optimization process may be specifically divided into the following two manners:

### (1) Perform independent optimization with a single head network as an object

The following uses a first head network in the N parallel head networks as an object to describe a process of optimizing the first head network in the N parallel head networks. The first head network is any one of the N parallel head networks.

The first head network outputs D types of output results, and the H types of output results include the D types of output results, where D is a positive integer. G pieces of training data in a training set are separately input into the updated neural network, to obtain the D types of output results output by the first head network. A quantity of output results included in each type of the D types of output results is G, that is, D*G output results are obtained in total, where G is a positive integer.

The G pieces of training data may be completely the same as, completely different from, or partially the same as the training data included in the batch of training data.

For the D types of output results obtained based on the G pieces of training data, loss values of a part or all of output results in each type of output results are accumulated, to obtain D accumulated loss values respectively corresponding to the D types of output results.

For a process of selecting a part or all of output results from G output results included in each type of output result, refer to the process of selecting the output results by using the task label of the training data in the foregoing embodiment. Details are not described herein again.

After the D accumulated loss values are obtained, the D accumulated loss values are weighted to obtain a first loss value corresponding to the first head network in each training process; and then the first loss value is used to update a parameter in the first head network.

The D accumulated loss values correspond to the D types of output results, and a weight corresponding to each accumulated loss value is related to a category of an autonomous driving task corresponding to an output result for calculating the accumulated loss value.

The parameter in the first head network may be updated in either of the following two manners: (1) Only the parameter in the first head network is updated, and a structure of the first head network is not adjusted; and (2) A structure of the first head network is adjusted, and after adjustment, the parameter in the first head network is updated.

That is, a structure of the first head network after adjustment is the same as or different from a structure of the first head network in the foregoing updated neural network (namely, a neural network obtained after single-task training or multi-task joint training is performed) (in other words, after the parameter in the first head network is updated, the structure of the first head network changes or remains unchanged compared with that before the update).

### (2) Perform optimization with a head network corresponding to a single autonomous driving task as an object

The following uses L head networks corresponding to the first autonomous driving task in the N parallel head networks as objects to describe a process of optimizing the L head networks. The first autonomous driving task is any one of a plurality of autonomous driving tasks.

The L head networks output P types of output results. In the foregoing embodiment, the H types of output results include the P types of output results, where L and P are positive integers greater than or equal to 2.

G pieces of training data in a training set are separately input into the updated neural network, to obtain the P types of output results output by the L head network. A quantity of output results included in each type of the P types of output results is G, that is, P*G output results are obtained in total, where G is a positive integer.

The G pieces of training data may be completely the same as, completely different from, or partially the same as the training data included in the batch of training data.

Loss values of a part or all of output results in each type of the P types of output results are accumulated, to obtain P accumulated loss values respectively corresponding to the P types of output results.

After the P accumulated loss values are obtained, the P accumulated loss values are weighted, to obtain a second loss value corresponding to the L head networks in each training process.

Parameters in the L head networks are updated based on the second loss value. The parameters in the L head networks may be updated in either of the following two manners: (1) Only the parameters in the L head networks are updated, and structures of the L head networks are not adjusted; and (2) Structures of the L head networks are adjusted, and after adjustment, the parameters in the L head networks are updated.

That is, a structure of each of the updated L head networks is the same as or different from a structure of a corresponding head network in the foregoing updated neural network (that is, after the parameters in the L head networks are updated, the structures of the L head networks change or remain unchanged compared with those before the update).

For related steps in the foregoing process, refer to the foregoing corresponding descriptions. Details are not described herein again.

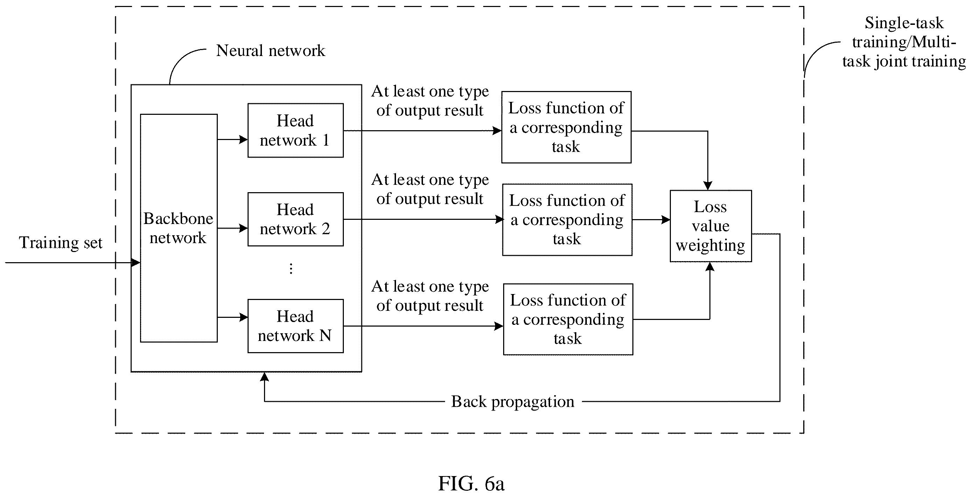

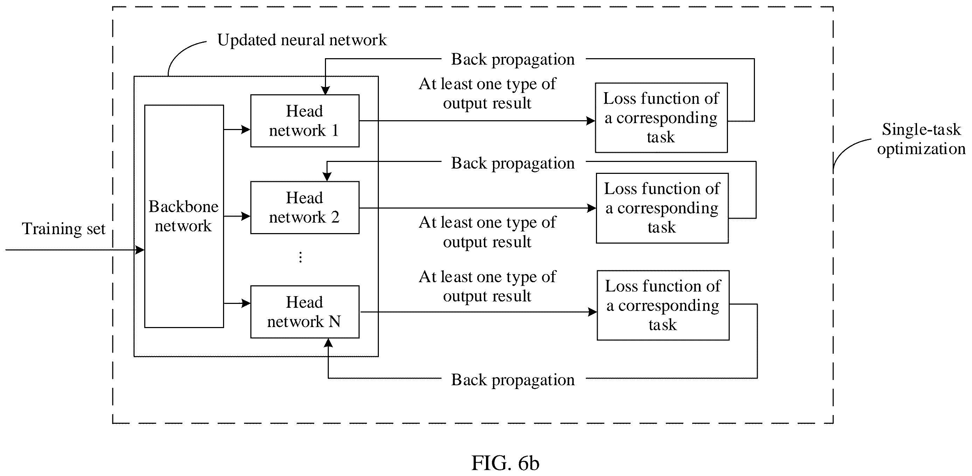

FIG. 6a and FIG. 6b are diagrams of a training process of a neural network according to an embodiment of this application. FIG. 6a is a diagram of a process of performing single-task training/multi-task joint training in each training process. FIG. 6b is a diagram of a process of performing single-task optimization in each training process.

As shown in FIG. 6a, in single-task training/multi-task joint training, one batch of training data in a training set is input into a backbone network of a neural network (for a specific structure of the neural network and an execution process, refer to descriptions in the embodiments in FIG. 2 to FIG. 5), and the backbone network performs feature extraction on each piece of training data in the batch of training data, to obtain N types of weighted feature data. Then, each type of the N types of weighted feature data is separately input into a corresponding head network, and each head network outputs at least one type of output result, to obtain H types of output results in total. In a specific application scenario, K types of output results are selected from the H types of output results, and loss values of a part or all of output results in each type of the K types of output results are accumulated, to obtain K accumulated loss values respectively corresponding to the K types of output results. Finally, the K accumulated loss values are weighted to obtain one loss value corresponding to a single-task training/multi-task joint training process, and back propagation is performed based on the loss value, to update parameters in the entire neural network.

Specifically, for a specific process of the single-task training/multi-task joint training, refer to corresponding descriptions in the embodiments in FIG. 2 to FIG. 5. Details are not described herein again.

After the single-task training/multi-task joint training is completed once, single-task optimization is performed once on the updated neural network. In other words, the neural network in FIG. 6b is a neural network obtained after the single-task training/multi-task joint training in FIG. 6a is completed.

As shown in FIG. 6b, in a single-task optimization process, training data (for example, G pieces of used data in the foregoing embodiment) in a training set is input into the updated neural network, to obtain N pieces of weighted feature data corresponding to the G pieces of training data, and then the N pieces of weighted feature data are separately input into a corresponding head network, to obtain H types of output results. Finally, with reference to descriptions in the embodiment in FIG. 5, single-task optimization is performed by using a single head network as an object or at least one head network corresponding to a single autonomous driving task as an object, to update a parameter in a corresponding head network.

Specifically, for a specific process of the single-task optimization, refer to corresponding descriptions in the embodiment in FIG. 5. Details are not described herein again.

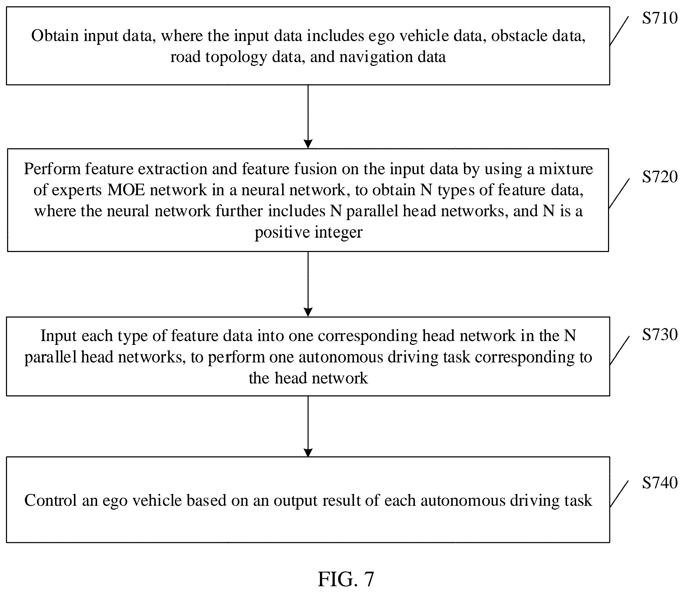

FIG. 7 is a schematic flowchart of an autonomous driving method according to an embodiment of this application. As shown in FIG. 7, the method includes step S710, step S720, step S730, and step S740.

Step S710: Obtain input data, where the input data includes ego vehicle data, obstacle data, road topology data, and navigation data.

Specifically, when the trained neural network is deployed in an ego vehicle, the ego vehicle senses an ambient environment by using a device such as a camera, a sensor, or a lidar that is mounted on the ego vehicle, and performs vectorization processing on data obtained through sensing and the navigation data of the ego vehicle, to obtain the input data.

When a neural network for autonomous driving is not deployed in a vehicle end but is deployed in a cloud server, an ego vehicle senses an ambient environment by using a device such as a camera, a sensor, or a lidar that is mounted on the ego vehicle, and may upload data obtained through sensing and the navigation data of the ego vehicle to the server. The server performs vectorization processing on the received data to obtain the input data.

Step S720: Perform feature extraction and feature fusion on the input data by using a mixture of experts MOE network in the neural network, to obtain N types of feature data, where the neural network further includes N parallel head networks, and N is a positive integer.

Step S730: Input each type of feature data into one corresponding head network in the N parallel head networks, to perform one autonomous driving task corresponding to the head network.

Specifically, for a specific process in which step S720 and step S730 are performed, refer to descriptions in the foregoing embodiments. Details are not described herein again.

Step S740: Control the ego vehicle based on an output result of each autonomous driving task.

Specifically, control data of the ego vehicle is generated based on the output result of the neural network, and then the ego vehicle is completely controlled based on the control data.

When the trained neural network is deployed in the ego vehicle, the control data is generated by the ego vehicle. When the neural network is deployed in a server, the control information is generated by the server and sent to the ego vehicle.

Optionally, each training process of the neural network is as follows: Each expert network in the MOE network is used to perform feature extraction and feature fusion on each piece of training data in one batch of training data, to obtain the N types of feature data; and the neural network is further used to separately weight a same type of feature data output by the MOE network, to obtain N types of weighted feature data; and respectively input the N types of weighted feature data into the corresponding head networks, to obtain H types of output results corresponding to each piece of training data, where the H types of output results include K types of output results, and K is a positive integer less than or equal to H; and a parameter in the neural network is completely updated based on one loss value corresponding to each training process, the loss value is obtained by weighting K accumulated loss values, the K accumulated loss values are in a one-to-one correspondence with the K types of output results, and the K accumulated loss values are obtained by accumulating loss values of a part or all of output results in each type of the K types of output results obtained based on the batch of training data.

Optionally, the K types of output results include a first-type output result, the H types of output results obtained based on the batch of training data include F first-type output results, and the F first-type output results all correspond to a first autonomous driving task in the autonomous driving task. The F first-type output results include E first-type output results, training data used to calculate the E first-type output results carries a label representing the first autonomous driving task, and an accumulated loss value corresponding to the first-type output result is obtained by accumulating E loss values respectively corresponding to the E first-type output results, where E is a positive integer less than or equal to F.

Optionally, the N parallel head networks include a first head network, the first head network outputs D types of output results, and the plurality of types of output results include the D types of output results, where D is a positive integer. After the updating a parameter in the neural network based on one loss value, the method further includes: separately inputting G pieces of training data in a training set into the updated neural network, to obtain the D types of output results output by the first head network, where the training set includes the batch of training data, and G is a positive integer; accumulating loss values of a part or all of output results in each type of the D types of output results, to obtain D accumulated loss values respectively corresponding to the D types of output results; weighting the D accumulated loss values to obtain a first loss value corresponding to the first head network in each training process; and updating a parameter in the first head network based on the first loss value.

Optionally, the N parallel head networks include L head networks, the L head networks correspond to the first autonomous driving task, the L head networks output P types of output results, and the H types of output results include the P types of output results, where L and P are positive integers greater than or equal to 2. After the updating a parameter in the neural network based on one loss value, the method further includes: separately inputting G pieces of training data in a training set into the updated neural network, to obtain the P types of output results output by the L head networks, where the training set includes the batch of training data, and G is a positive integer; accumulating loss values of a part or all of output results in each type of the P types of output results, to obtain P accumulated loss values respectively corresponding to the P types of output results; weighting the P accumulated loss values to obtain a second loss value corresponding to the L head networks in each training process; and updating parameters in the L head networks based on the second loss value.

Optionally, the MOE network includes a plurality of expert networks, and each of the plurality of expert networks includes a self-attention network and a cross-attention network. The self-attention network is used to perform feature extraction on the input data, the cross-attention network is used to perform feature fusion on features extracted by using the self-attention network, and the N types of feature data are generated based on an output result of the cross-attention network.

Optionally, the autonomous driving task includes a prediction task, a decision task, and a planning task. An output result of the prediction task includes a predicted trajectory of an obstacle and predicted trajectory distribution of the obstacle, an output result of the decision task includes an ego vehicle decision, and an output result of the planning task includes a planned road of the ego vehicle, a planned trajectory of the ego vehicle, and planned trajectory distribution of the ego vehicle.

Specifically, for a specific structure of the neural network used in the foregoing autonomous driving method and a corresponding training and inference process, refer to descriptions in the foregoing embodiments. Details are not described herein again.

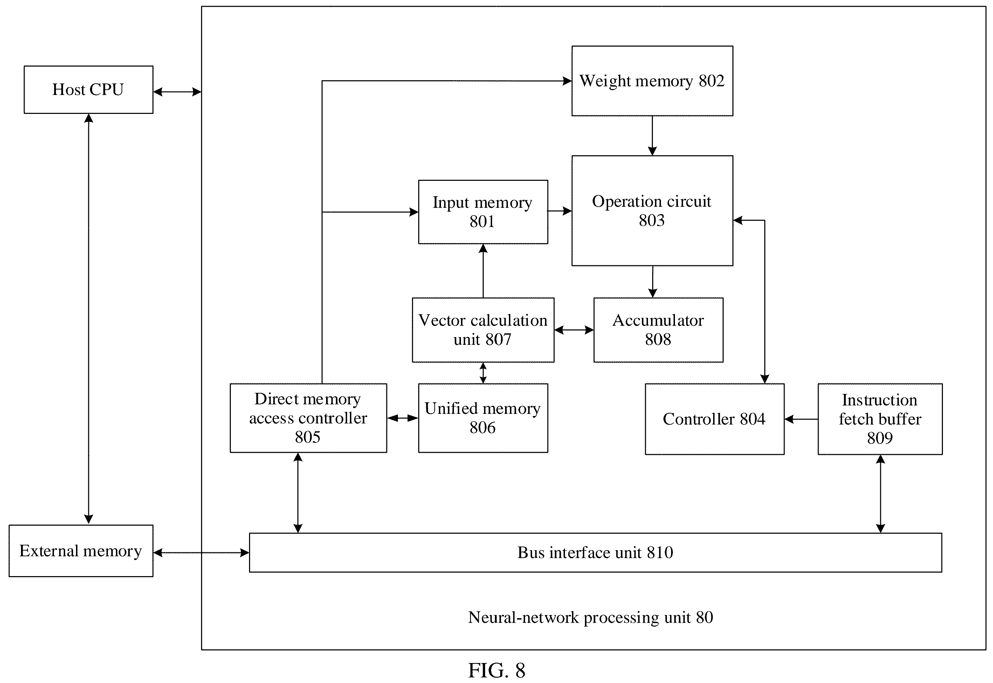

FIG. 8 is a diagram of a hardware structure of a chip according to an embodiment of this application. The chip may be configured to perform the training method and/or the autonomous driving method in embodiments of this application.

As shown in FIG. 8, a neural-network processing unit (Neural-Network Processing Unit, NPU) 80 is used as a coprocessor and mounted on a host CPU (Host CPU), and the host CPU assigns a task to perform the method for training the neural network in the foregoing embodiment or a related process in the autonomous driving method in the foregoing embodiment.

A core part of the NPU is an operation circuit 803, and a controller 804 controls the operation circuit 803 to extract data in a memory (a weight memory or an input memory) and perform an operation.

In some implementations, the operation circuit 803 includes a plurality of processing units (processing engines, PEs) inside. In some implementations, the operation circuit 803 is a two-dimensional systolic array. Alternatively, the operation circuit 803 may be a one-dimensional systolic array, or another electronic circuit that can perform mathematical operations such as a multiplication and an addition. In some implementations, the operation circuit 803 is a general matrix processor.

For example, it is assumed that there is an input matrix A, a weight matrix B, and an output matrix C. The operation circuit fetches corresponding data of the matrix B from a weight memory 802, and buffers the corresponding data into each PE in the operation circuit. The operation circuit fetches data of the matrix A from an input memory 801, and performs a matrix operation with the matrix B. A partial result or a final result of an obtained matrix is stored in an accumulator (accumulator) 808.

A vector calculation unit 807 may perform further processing of vector multiplication, vector addition, an exponential operation, a logarithmic operation, magnitude comparison, or the like on an output of the operation circuit. For example, the vector calculation unit 807 may be configured to perform network calculation, such as pooling (Pooling), batch normalization (Batch Normalization), or local response normalization (Local Response Normalization), at a non-convolutional/non-FC layer in a neural network.

In some implementations, the vector calculation unit 807 can save a processed output vector to a unified memory 806. For example, the vector computation unit 807 may apply a nonlinear function to the output of the operation circuit 803, for example, a vector of an accumulated value, to generate an activation value. In some implementations, the vector computation unit 807 generates a normalized value, a combined value, or a normalized value and a combined value. In some implementations, the processed output vector can be used as an activation input to the operation circuit 803, for example, used by a subsequent layer in the neural network.

The unified memory 806 is configured to store input data and output data.

A direct memory access controller (direct memory access controller, DMAC) 805 transfers input data in an external memory to the input memory 801 and/or the unified memory 806, stores weight data in the external memory in the weight memory 802, and stores data in the unified memory 806 in the external memory.

A bus interface unit (bus interface unit, BIU) 810 is configured to implement interaction between the host CPU, the DMAC, and an instruction fetch buffer 809 through a bus.

The instruction fetch buffer (instruction fetch buffer) 809 connected to the controller 804 is configured to store instructions used by the controller 804.

The controller 804 is configured to invoke the instructions buffered in the instruction fetch buffer 809, to control a working process of an operation accelerator.

Usually, the unified memory 806, the input memory 801, the weight memory 802, and the instruction fetch buffer 809 each are an on-chip (on-chip) memory. The external memory is a memory outside the NPU. The external memory may be a double data rate synchronous dynamic random access memory (double data rate synchronous dynamic random access memory, DDR SDRAM for short), a high bandwidth memory (high bandwidth memory, HBM), or another readable and writable memory.

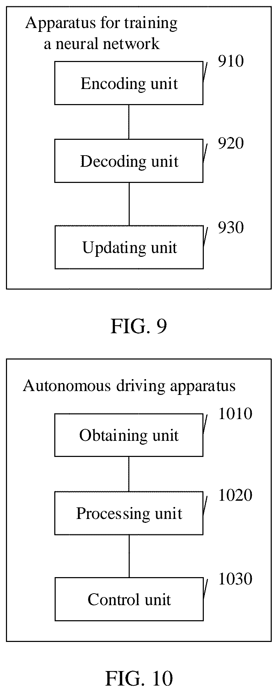

FIG. 9 shows an apparatus for training a neural network according to an embodiment of this application. The apparatus for training the neural network is configured to perform the method for training the neural network in the foregoing embodiments. The neural network for training may be the neural network in the foregoing embodiments. To be specific, the neural network includes a mixture of experts MOE network and N parallel head networks, and the MOE network includes M expert networks, where M and N are positive integers.

As shown in FIG. 9, the apparatus includes an encoding unit 910, a decoding unit 920, and an updating unit 930.

The encoding unit 910 is configured to: in each training process, perform feature extraction and feature fusion on each piece of training data in one batch of training data by using each of the M expert networks, to obtain N types of feature data; and separately weight a same type of feature data output by the M expert networks, to obtain N types of weighted feature data, where the N types of weighted feature data are in a one-to-one correspondence with the N parallel head networks, each of the N parallel head networks corresponds to one autonomous driving task, and the autonomous driving task includes a prediction task, a decision task, and a planning task. The decoding unit 920 is configured to respectively input the N types of weighted feature data into the corresponding head networks, to obtain H types of output results corresponding to each piece of training data, where the H types of output results include K types of output results, and K is a positive integer less than or equal to H. The updating unit 930 is configured to: accumulate loss values of a part or all of output results in each type of the K types of output results obtained based on the batch of training data, to obtain K accumulated loss values respectively corresponding to the K types of output results; weight the K accumulated loss values to obtain one loss value corresponding to each training process; and update a parameter in the neural network based on the loss value.

In a feasible implementation, the K types of output results include a first-type output result, the H types of output results obtained based on the batch of training data include F first-type output results, and the F first-type output results all correspond to a first autonomous driving task in the autonomous driving task. The F first-type output results include E first-type output results, training data used to calculate the E first-type output results carries a label representing the first autonomous driving task, and an accumulated loss value corresponding to the first-type output result is obtained by accumulating E loss values respectively corresponding to the E first-type output results, where E is a positive integer less than or equal to F.

In a feasible implementation, the N parallel head networks include a first head network, the first head network outputs D types of output results, and the H types of output results include the D types of output results, where D is a positive integer. After the parameter in the neural network is updated based on the loss value, the encoding unit 910 and the decoding unit 920 are further configured to: process G pieces of training data in a training set by using the updated neural network, to obtain the D types output results output by the first head network, where the training set includes the batch of training data, and G is a positive integer; and the updating unit is further configured to: accumulate loss values of a part of or all output results in each type of the D types of output results, to obtain D accumulated loss values respectively corresponding to the D types of output results; weight the D accumulated loss values to obtain a first loss value corresponding to the first head network in each training process; and update a parameter in the first head network based on the first loss value.

In a feasible implementation, the N parallel head networks include L head networks, the L head networks correspond to the first autonomous driving task, the L head networks output P types of output results, and the H types of output results include the P types of output results, where L and P are positive integers greater than or equal to 2. After the parameter in the neural network is updated based on the loss value, the encoding unit 910 and the decoding unit 920 are further configured to: process G pieces of training data in a training set by using the updated neural network, to obtain the P types output results output by the L head network, where the training set includes the batch of training data, and G is a positive integer; and the updating unit is further configured to: accumulate loss values of a part of or all output results in each type of the P types of output results, to obtain P accumulated loss values respectively corresponding to the P types of output results; weight the P accumulated loss values to obtain a second loss value corresponding to the L head network in each training process; and update a parameter in the L head network based on the second loss value.

In a feasible implementation, the H types of output results include a predicted trajectory of an obstacle, predicted trajectory distribution of the obstacle, an ego vehicle decision, a planned road of an ego vehicle, a planned trajectory of the ego vehicle, and planned trajectory distribution of the ego vehicle. The predicted trajectory of the obstacle and the predicted trajectory distribution of the obstacle correspond to the prediction task; the ego vehicle decision corresponds to the decision task; and the planned road of the ego vehicle, the planned trajectory of the ego vehicle, and the planned trajectory distribution of the ego vehicle correspond to the planning task.

Specifically, for a specific execution process of each unit in the foregoing apparatus, refer to corresponding descriptions in the foregoing embodiment. Details are not described herein again.

FIG. 10 shows an autonomous driving apparatus according to an embodiment of this application. The autonomous driving apparatus is configured to perform the autonomous driving method in the foregoing embodiment. The apparatus includes an obtaining unit 1010, a processing unit 1020, and a control unit 1030.

The obtaining unit 1010 is configured to obtain input data, where the input data includes ego vehicle data, obstacle data, road topology data, and navigation data. The processing unit 1020 is configured to: perform feature extraction and feature fusion on the input data by using a mixture of experts MOE network in a neural network, to obtain N types of feature data, where the neural network further includes N parallel head networks, and N is a positive integer; and input each type of feature data into one corresponding head network in the N parallel head networks, to perform one autonomous driving task corresponding to the head network. The control unit 1030 is configured to control an ego vehicle based on an output result of each autonomous driving task.

In a feasible implementation, in each training process of the neural network, the processing unit 1020 is specifically configured to: perform feature extraction and feature fusion on each piece of training data in one batch of training data by using each expert network in the MOE network, to obtain the N types of feature data; separately weight, by using the neural network, a same type of feature data output by the MOE network, to obtain N types of weighted feature data; and respectively input the N types of weighted feature data into the corresponding head networks, to obtain H types of output results corresponding to each piece of training data, where the H types of output results include K types of output results, and K is a positive integer less than or equal to H; and a parameter in the neural network is completely updated based on one loss value corresponding to each training process, the loss value is obtained by weighting K accumulated loss values, the K accumulated loss values are in a one-to-one correspondence with the K types of output results, and the K accumulated loss values are obtained by accumulating loss values of a part or all of output results in each type of the K types of output results obtained based on the batch of training data.

In a feasible implementation, the K types of output results include a first-type output result, the H types of output results obtained based on the batch of training data include F first-type output results, and the F first-type output results all correspond to a first autonomous driving task in the autonomous driving task. The F first-type output results include E first-type output results, training data used to calculate the E first-type output results carries a label representing the first autonomous driving task, and an accumulated loss value corresponding to the first-type output result is obtained by accumulating E loss values respectively corresponding to the E first-type output results, where E is a positive integer less than or equal to F.

In a feasible implementation, the N parallel head networks include a first head network, the first head network outputs D types of output results, and the plurality of types of output results include the D types of output results, where D is a positive integer. After the parameter in the neural network is updated based on the loss value, the processing unit 1020 is further configured to: process G pieces of training data in a training set by using the updated neural network, to obtain the D types output results output by the first head network, where the training set includes the batch of training data, and G is a positive integer; and accumulate loss values of a part or all of output results in each type of the D types of output results, to obtain D accumulated loss values respectively corresponding to the D types of output results; weight the D accumulated loss values to obtain a first loss value corresponding to the first head network in each training process; and update a parameter in the first head network based on the first loss value.

In a feasible implementation, the N parallel head networks include L head networks, the L head networks correspond to the first autonomous driving task, the L head networks output P types of output results, and the H types of output results include the P types of output results, where L and P are positive integers greater than or equal to 2. After the parameter in the neural network is updated based on the loss value, the processing unit 1020 is further configured to: process G pieces of training data in a training set by using the updated neural network, to obtain the P types output results output by the L head network, where the training set includes the batch of training data, and G is a positive integer; accumulate loss values of a part or all of output results in each type of the P types of output results, to obtain P accumulated loss values respectively corresponding to the P types of output results; weight the P accumulated loss values to obtain a second loss value corresponding to the L head networks in each training process; and update parameters in the L head networks based on the second loss value.

In a feasible implementation, the MOE network includes a plurality of expert networks, and each of the plurality of expert networks includes a self-attention network and a cross-attention network. The self-attention network is used to perform feature extraction on the input data, the cross-attention network is used to perform feature fusion on features extracted by using the self-attention network, and the N types of feature data are generated based on an output result of the cross-attention network.

In a feasible implementation, the autonomous driving task includes a prediction task, a decision task, and a planning task. An output result of the prediction task includes a predicted trajectory of an obstacle and predicted trajectory distribution of the obstacle, an output result of the decision task includes an ego vehicle decision, and an output result of the planning task includes a planned road of the ego vehicle, a planned trajectory of the ego vehicle, and planned trajectory distribution of the ego vehicle.

Specifically, for a specific execution process of each unit in the foregoing autonomous driving apparatus, refer to corresponding descriptions in the foregoing method embodiments. Details are not described herein again.

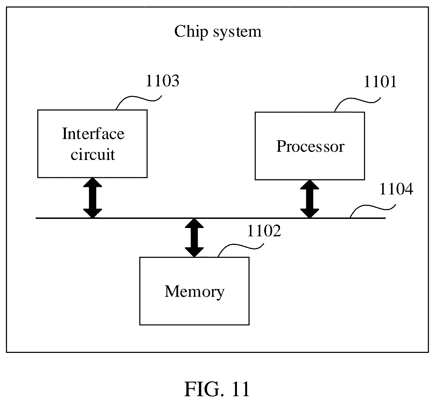

FIG. 11 is a diagram of a structure of a chip system according to an embodiment of this application. As shown in FIG. 11, the chip system includes at least one processor 1101, a memory 1102, and an interface circuit 1103. The at least one processor 1101, the memory 1102, and the interface circuit 1103 are connected through a bus 1104. The at least one processor 1101 may include the neural-network processing unit shown in FIG. 8.

The memory 1102 stores a program instruction corresponding to the method for training the neural network and/or the autonomous driving method. The interface circuit 1103 is configured to transmit input data. The memory 1102 executes the program instruction in the memory 1102 to implement the method for training the neural network and/or the autonomous driving method in the foregoing embodiments.

Specifically, for a specific execution process of the chip system, refer to corresponding descriptions in the foregoing method embodiments. Details are not described herein again.

An embodiment of this application provides a server. The server includes the chip system in the embodiment in FIG. 11.

An embodiment of this application provides a vehicle. The vehicle includes the chip system in the embodiment in FIG. 11.

An embodiment of this application provides a computer-readable storage medium. The computer-readable storage medium stores a computer program. When the computer program is executed, the method according to any one of the embodiment in FIG. 3 and/or the embodiment in FIG. 5 is implemented.

An embodiment of this application provides a computer program product. The computer program product includes instructions. When the instructions are executed, the method according to any one of the embodiment in FIG. 3 and/or the embodiment in FIG. 5 is implemented.

In the foregoing embodiments, description of each embodiment has its own emphasis. For a part that is not described in detail in an embodiment, reference may be made to related descriptions in other embodiments. It should be noted that, for brief description, the foregoing method embodiments are represented as a series of action combinations. However, a person skilled in the art should understand that this application is not limited to the described action sequence, because some steps may be performed in other sequences or simultaneously according to this application. It should be further appreciated by a person skilled in the art that embodiments described in this specification all belong to example embodiments, and related actions and modules are not necessarily required by this application.

In the several embodiments provided in this application, it should be understood that the disclosed apparatus may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form or another form.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

The foregoing embodiments are merely intended to describe the technical solutions of this application, but are not intended to limit this application. Although this application is described in detail with reference to the foregoing embodiments, a person of ordinary skill in the art should understand that the technical solutions described in the foregoing embodiments may still be modified or some technical features thereof may be equivalently replaced. These modifications or replacements do not enable essence of a corresponding technical solution to depart from the spirit and scope of the technical solutions of embodiments of this application.

## Claims

1. A neural network for autonomous driving, wherein the neural network comprises a mixture of experts MOE network and N parallel head networks, wherein N is a positive integer;
the MOE network is used to perform feature extraction and feature fusion on input data to obtain N types of feature data, wherein the input data comprises ego vehicle data, obstacle data, road topology data, and navigation data, the N types of feature data are in a one-to-one correspondence with the N parallel head networks, and each of the N parallel head networks corresponds to one autonomous driving task; and
each head network performs one corresponding autonomous driving task based on one type of feature data that is correspondingly input, wherein the autonomous driving task comprises a prediction task, a decision task, and a planning task.

2. The method according to claim 1, wherein
the MOE network comprises a plurality of expert networks, and each of the plurality of expert networks comprises a self-attention network and a cross-attention network, wherein
the self-attention network is used to perform feature extraction on the input data, the cross-attention network is used to perform feature fusion on features extracted by using the self-attention network, and the N types of feature data are generated based on an output result of the cross-attention network.

3. The method according to claim 2, wherein
the plurality of expert networks comprise a first expert network, the first expert network is an expert network that performs feature extraction and feature fusion on the input data in an inference process, and the first expert network comprises a first self-attention network, a first cross-attention network, a second self-attention network, and a second cross-attention network;
the first self-attention network is used to perform feature extraction on the ego vehicle data and the obstacle data, to obtain a first query Query matrix, a first key Key matrix, and a first value Value matrix; and the second self-attention network is used to perform feature extraction on the road topology data and the navigation data, to obtain a second query Query matrix, a second key Key matrix, and a second value Value matrix; and
the first cross-attention network is used to perform feature fusion on the first query matrix, the second key matrix, and the second value matrix; the second cross-attention network is used to perform feature fusion on the second query matrix, the first key matrix, and the first value matrix; and the N types of feature data are generated based on an output result of the first cross-attention network and an output result of the second cross-attention network.

4. The method according to any one of claims 1 to 3, wherein
an output result corresponding to the prediction task comprises a predicted trajectory of an obstacle and predicted trajectory distribution of the obstacle;
an output result corresponding to the decision task comprises an ego vehicle decision, and the ego vehicle decision comprises an ego vehicle preemption decision, an ego vehicle avoidance decision, and an obstacle ignoring decision; and
an output result corresponding to the planning task comprises a planned road of an ego vehicle, a planned trajectory of the ego vehicle, and planned trajectory distribution of the ego vehicle.

5. A method for training a neural network, wherein the neural network comprises a mixture of experts MOE network and N parallel head networks, and the MOE network comprises M expert networks, wherein M and N are positive integers; and the method comprises:
in each training process, performing feature extraction and feature fusion on each piece of training data in one batch of training data by using each of the M expert networks, to obtain N types of feature data;
separately weighting a same type of feature data output by the M expert networks, to obtain N types of weighted feature data, wherein the N types of weighted feature data are in a one-to-one correspondence with the N parallel head networks, each of the N parallel head networks corresponds to one autonomous driving task, and the autonomous driving task comprises a prediction task, a decision task, and a planning task;
respectively inputting the N types of weighted feature data into the corresponding head networks, to obtain H types of output results corresponding to each piece of training data, wherein the H types of output results comprise K types of output results, and K is a positive integer less than or equal to H;
accumulating loss values of a part or all of output results in each type of the K types of output results obtained based on the batch of training data, to obtain K accumulated loss values respectively corresponding to the K types of output results; and
weighting the K accumulated loss values to obtain one loss value corresponding to each training process, and updating a parameter in the neural network based on the loss value.

6. The method according to claim 5, wherein
the K types of output results comprise a first-type output result, the H types of output results obtained based on the batch of training data comprise F first-type output results, and the F first-type output results all correspond to a first autonomous driving task in the autonomous driving task; and
the F first-type output results comprise E first-type output results, training data used to calculate the E first-type output results carries a label representing the first autonomous driving task, and an accumulated loss value corresponding to the first-type output result is obtained by accumulating E loss values respectively corresponding to the E first-type output results, wherein E is a positive integer less than or equal to F.

7. The method according to claim 5 or 6, wherein the N parallel head networks comprise a first head network, the first head network outputs D types of output results, and the H types of output results comprise the D types of output results, wherein D is a positive integer; and after the updating a parameter in the neural network based on the loss value, the method further comprises:
separately inputting G pieces of training data in a training set into the updated neural network, to obtain the D types of output results output by the first head network, wherein the training set comprises the batch of training data, and G is a positive integer;
accumulating loss values of a part or all of output results in each type of the D types of output results, to obtain D accumulated loss values respectively corresponding to the D types of output results;
weighting the D accumulated loss values to obtain a first loss value corresponding to the first head network in each training process; and
updating a parameter in the first head network based on the first loss value.

8. The method according to claim 5 or 6, wherein the N parallel head networks comprise L head networks, the L head networks correspond to the first autonomous driving task, the L head networks output P types of output results, and the H types of output results comprise the P types of output results, wherein L and P are positive integers greater than or equal to 2; and after the updating a parameter in the neural network based on the loss value, the method further comprises:
separately inputting G pieces of training data in a training set into the updated neural network, to obtain the P types of output results output by the L head networks, wherein the training set comprises the batch of training data, and G is a positive integer;
accumulating loss values of a part or all of output results in each type of the P types of output results, to obtain P accumulated loss values respectively corresponding to the P types of output results;
weighting the P accumulated loss values to obtain a second loss value corresponding to the L head networks in each training process; and
updating parameters in the L head networks based on the second loss value.

9. The method according to any one of claims 5 to 8, wherein
the H types of output results comprise a predicted trajectory of an obstacle, predicted trajectory distribution of the obstacle, an ego vehicle decision, a planned road of an ego vehicle, a planned trajectory of the ego vehicle, and planned trajectory distribution of the ego vehicle; and
the predicted trajectory of the obstacle and the predicted trajectory distribution of the obstacle correspond to the prediction task; the ego vehicle decision corresponds to the decision task; and the planned road of the ego vehicle, the planned trajectory of the ego vehicle, and the planned trajectory distribution of the ego vehicle correspond to the planning task.

10. An autonomous driving method, wherein the method comprises:
obtaining input data, wherein the input data comprises ego vehicle data, obstacle data, road topology data, and navigation data;
performing feature extraction and feature fusion on the input data by using a mixture of experts MOE network in a neural network, to obtain N types of feature data, wherein the neural network further comprises N parallel head networks, and N is a positive integer;
inputting each type of feature data into one corresponding head network in the N parallel head networks, to perform one autonomous driving task corresponding to the head network; and
controlling the ego vehicle based on an output result of each autonomous driving task.

11. The method according to claim 10, wherein
each training process of the neural network is as follows: Each expert network in the MOE network is used to perform feature extraction and feature fusion on each piece of training data in one batch of training data, to obtain the N types of feature data; and the neural network is further used to separately weight a same type of feature data output by the MOE network, to obtain N types of weighted feature data; and respectively input the N types of weighted feature data into the corresponding head networks, to obtain H types of output results corresponding to each piece of training data, wherein the H types of output results comprise K types of output results, and K is a positive integer less than or equal to H; and
a parameter in the neural network is completely updated based on one loss value corresponding to each training process, the loss value is obtained by weighting K accumulated loss values, the K accumulated loss values are in a one-to-one correspondence with the K types of output results, and the K accumulated loss values are obtained by accumulating loss values of a part or all of output results in each type of the K types of output results obtained based on the batch of training data.

12. The method according to claim 10 or 11, wherein
the K types of output results comprise a first-type output result, the H types of output results obtained based on the batch of training data comprise F first-type output results, and the F first-type output results all correspond to a first autonomous driving task in the autonomous driving task; and
the F first-type output results comprise E first-type output results, training data used to calculate the E first-type output results carries a label representing the first autonomous driving task, and an accumulated loss value corresponding to the first-type output result is obtained by accumulating E loss values respectively corresponding to the E first-type output results, wherein E is a positive integer less than or equal to F.

13. The method according to any one of claims 10 to 12, wherein the N parallel head networks comprise a first head network, the first head network outputs D types of output results, and the plurality of types of output results comprise the D types of output results, wherein D is a positive integer; and after the updating a parameter in the neural network based on one loss value, the method further comprises:
separately inputting G pieces of training data in a training set into the updated neural network, to obtain the D types of output results output by the first head network, wherein the training set comprises the batch of training data, and G is a positive integer;
accumulating loss values of a part or all of output results in each type of the D types of output results, to obtain D accumulated loss values respectively corresponding to the D types of output results;
weighting the D accumulated loss values to obtain a first loss value corresponding to the first head network in each training process; and
updating a parameter in the first head network based on the first loss value.

14. The method according to any one of claims 10 to 12, wherein the N parallel head networks comprise L head networks, the L head networks correspond to the first autonomous driving task, the L head networks output P types of output results, and the H types of output results comprise the P types of output results, wherein L and P are positive integers greater than or equal to 2; and after the updating a parameter in the neural network based on one loss value, the method further comprises:
separately inputting G pieces of training data in a training set into the updated neural network, to obtain the P types of output results output by the L head networks, wherein the training set comprises the batch of training data, and G is a positive integer;
accumulating loss values of a part or all of output results in each type of the P types of output results, to obtain P accumulated loss values respectively corresponding to the P types of output results;
weighting the P accumulated loss values to obtain a second loss value corresponding to the L head networks in each training process; and
updating parameters in the L head networks based on the second loss value.

15. The method according to any one of claims 10 to 14, wherein
the MOE network comprises a plurality of expert networks, and each of the plurality of expert networks comprises a self-attention network and a cross-attention network, wherein
the self-attention network is used to perform feature extraction on the input data, the cross-attention network is used to perform feature fusion on features extracted by using the self-attention network, and the N types of feature data are generated based on an output result of the cross-attention network.

16. The method according to any one of claims 10 to 15, wherein
the autonomous driving task comprises a prediction task, a decision task, and a planning task; and
an output result of the prediction task comprises a predicted trajectory of an obstacle and predicted trajectory distribution of the obstacle, an output result of the decision task comprises an ego vehicle decision, and an output result of the planning task comprises a planned road of the ego vehicle, a planned trajectory of the ego vehicle, and planned trajectory distribution of the ego vehicle.

17. An apparatus for training a neural network, wherein the neural network comprises a mixture of experts MOE network and N parallel head networks, and the MOE network comprises M expert networks, wherein M and N are positive integers; and the apparatus comprises:
an encoding unit, configured to: in each training process, perform feature extraction and feature fusion on each piece of training data in one batch of training data by using each of the M expert networks, to obtain N types of feature data; and separately weight a same type of feature data output by the M expert networks, to obtain N types of weighted feature data, wherein the N types of weighted feature data are in a one-to-one correspondence with the N parallel head networks, each of the N parallel head networks corresponds to one autonomous driving task, and the autonomous driving task comprises a prediction task, a decision task, and a planning task;
a decoding unit, configured to respectively input the N types of weighted feature data into the corresponding head networks, to obtain H types of output results corresponding to each piece of training data, wherein the H types of output results comprise K types of output results, and K is a positive integer less than or equal to H; and
an updating unit, configured to: accumulate loss values of a part or all of output results in each type of the K types of output results obtained based on the batch of training data, to obtain K accumulated loss values respectively corresponding to the K types of output results; weight the K accumulated loss values to obtain one loss value corresponding to each training process; and update a parameter in the neural network based on the loss value.

18. The apparatus according to claim 17, wherein
the K types of output results comprise a first-type output result, the H types of output results obtained based on the batch of training data comprise F first-type output results, and the F first-type output results all correspond to a first autonomous driving task in the autonomous driving task; and
the F first-type output results comprise E first-type output results, training data used to calculate the E first-type output results carries a label representing the first autonomous driving task, and an accumulated loss value corresponding to the first-type output result is obtained by accumulating E loss values respectively corresponding to the E first-type output results, wherein E is a positive integer less than or equal to F.

19. The apparatus according to claim 17 or 18, wherein the N parallel head networks comprise a first head network, the first head network outputs D types of output results, and the H types of output results comprise the D types of output results, wherein D is a positive integer; and after the parameter in the neural network is updated based on the loss value, the encoding unit and the decoding unit are further configured to:
process G pieces of training data in a training set by using the updated neural network, to obtain the D types output results output by the first head network, wherein the training set comprises the batch of training data, and G is a positive integer; and
the updating unit is further configured to: accumulate loss values of a part of or all output results in each type of the D types of output results, to obtain D accumulated loss values respectively corresponding to the D types of output results; weight the D accumulated loss values to obtain a first loss value corresponding to the first head network in each training process; and update a parameter in the first head network based on the first loss value.

20. The apparatus according to claim 17 or 18, wherein the N parallel head networks comprise L head networks, the L head networks correspond to the first autonomous driving task, the L head networks output P types of output results, and the H types of output results comprise the P types of output results, wherein L and P are positive integers greater than or equal to 2; and after the parameter in the neural network is updated based on the loss value, the encoding unit and the decoding unit are further configured to:
process G pieces of training data in a training set by using the updated neural network, to obtain the P types output results output by the L head network, wherein the training set comprises the batch of training data, and G is a positive integer; and
the updating unit is further configured to: accumulate loss values of a part of or all output results in each type of the P types of output results, to obtain P accumulated loss values respectively corresponding to the P types of output results; weight the P accumulated loss values to obtain a second loss value corresponding to the L head network in each training process; and update a parameter in the L head network based on the second loss value.

21. The apparatus according to any one of claims 17 to 20, wherein
the H types of output results comprise a predicted trajectory of an obstacle, predicted trajectory distribution of the obstacle, an ego vehicle decision, a planned road of an ego vehicle, a planned trajectory of the ego vehicle, and planned trajectory distribution of the ego vehicle; and
the predicted trajectory of the obstacle and the predicted trajectory distribution of the obstacle correspond to the prediction task; the ego vehicle decision corresponds to the decision task; and the planned road of the ego vehicle, the planned trajectory of the ego vehicle, and the planned trajectory distribution of the ego vehicle correspond to the planning task.

22. An autonomous driving apparatus, wherein the apparatus comprises:
an obtaining unit, configured to obtain input data, wherein the input data comprises ego vehicle data, obstacle data, road topology data, and navigation data;
a processing unit, configured to: perform feature extraction and feature fusion on the input data by using a mixture of experts MOE network in a neural network, to obtain N types of feature data, wherein the neural network further comprises N parallel head networks, and N is a positive integer; and input each type of feature data into one corresponding head network in the N parallel head networks, to perform one autonomous driving task corresponding to the head network; and
a control unit, configured to control the ego vehicle based on an output result of each autonomous driving task.

23. The apparatus according to claim 22, wherein in each training process of the neural network, the processing unit is specifically configured to:
perform feature extraction and feature fusion on each piece of training data in one batch of training data by using each expert network in the MOE network, to obtain the N types of feature data; separately weight, by using the neural network, a same type of feature data output by the MOE network, to obtain N types of weighted feature data; and respectively input the N types of weighted feature data into the corresponding head networks, to obtain H types of output results corresponding to each piece of training data, wherein the H types of output results comprise K types of output results, and K is a positive integer less than or equal to H; and
a parameter in the neural network is completely updated based on one loss value corresponding to each training process, the loss value is obtained by weighting K accumulated loss values, the K accumulated loss values are in a one-to-one correspondence with the K types of output results, and the K accumulated loss values are obtained by accumulating loss values of a part or all of output results in each type of the K types of output results obtained based on the batch of training data.

24. The apparatus according to claim 22 or 23, wherein
the K types of output results comprise a first-type output result, the H types of output results obtained based on the batch of training data comprise F first-type output results, and the F first-type output results all correspond to a first autonomous driving task in the autonomous driving task; and
the F first-type output results comprise E first-type output results, training data used to calculate the E first-type output results carries a label representing the first autonomous driving task, and an accumulated loss value corresponding to the first-type output result is obtained by accumulating E loss values respectively corresponding to the E first-type output results, wherein E is a positive integer less than or equal to F.

25. The apparatus according to any one of claims 22 to 24, wherein the N parallel head networks comprise a first head network, the first head network outputs D types of output results, and the plurality of types of output results comprise the D types of output results, wherein D is a positive integer; and after the parameter in the neural network is updated based on the loss value, the processing unit is further configured to:
process G pieces of training data in a training set by using the updated neural network, to obtain the D types output results output by the first head network, wherein the training set comprises the batch of training data, and G is a positive integer; and
accumulate loss values of a part or all of output results in each type of the D types of output results, to obtain D accumulated loss values respectively corresponding to the D types of output results;
weight the D accumulated loss values to obtain a first loss value corresponding to the first head network in each training process; and
update a parameter in the first head network based on the first loss value.

26. The apparatus according to any one of claims 22 to 24, wherein the N parallel head networks comprise L head networks, the L head networks correspond to the first autonomous driving task, the L head networks output P types of output results, and the H types of output results comprise the P types of output results, wherein L and P are positive integers greater than or equal to 2; and after the parameter in the neural network is updated based on the loss value, the processing unit is further configured to:
process G pieces of training data in a training set by using the updated neural network, to obtain the P types output results output by the L head network, wherein the training set comprises the batch of training data, and G is a positive integer;
accumulate loss values of a part or all of output results in each type of the P types of output results, to obtain P accumulated loss values respectively corresponding to the P types of output results;
weight the P accumulated loss values to obtain a second loss value corresponding to the L head networks in each training process; and
update parameters in the L head networks based on the second loss value.

27. The apparatus according to any one of claims 22 to 26, wherein
the MOE network comprises a plurality of expert networks, and each of the plurality of expert networks comprises a self-attention network and a cross-attention network, wherein
the self-attention network is used to perform feature extraction on the input data, the cross-attention network is used to perform feature fusion on features extracted by using the self-attention network, and the N types of feature data are generated based on an output result of the cross-attention network.

28. The apparatus according to any one of claims 22 to 27, wherein
the autonomous driving task comprises a prediction task, a decision task, and a planning task; and
an output result of the prediction task comprises a predicted trajectory of an obstacle and predicted trajectory distribution of the obstacle, an output result of the decision task comprises an ego vehicle decision, and an output result of the planning task comprises a planned road of the ego vehicle, a planned trajectory of the ego vehicle, and planned trajectory distribution of the ego vehicle.

29. A chip system, wherein the chip system comprises at least one processor, a memory, and an interface circuit; the memory, the interface circuit, and the at least one processor are interconnected through a line; the at least one memory stores instructions; and when the instructions are executed by the processor, the method according to any one of claims 5 to 9 is implemented.

30. A chip system, wherein the chip system comprises at least one processor, a memory, and an interface circuit; the memory, the interface circuit, and the at least one processor are interconnected through a line; the at least one memory stores instructions; and when the instructions are executed by the processor, the method according to any one of claims 10 to 16 is implemented.

31. A server, wherein the server comprises the chip system according to claim 29 or 30.

32. A vehicle, wherein the vehicle comprises the chip system according to claim 30.

33. A computer-readable storage medium, wherein the computer-readable storage medium stores a computer program, and when the computer program is executed, the method according to any one of claims 5 to 16 is implemented.

34. A computer program product, wherein the computer program product comprises instructions, and when the instructions are executed, the method according to any one of claims 5 to 16 is implemented.
